# EUROPEAN PATENT APPLICATION

(11) **EP 4 718 223 A1**
(43) Date of publication of application: **01.04.2026**
(21) Application number: 25753001.4
(22) Date of filing: 05.08.2025
(51) Int. Cl.: G06F 3/047, G06F 3/044, G06F 3/041

(54) **SUPPORT PLATE INCLUDING DIGITIZER SENSING WIRES, AND FOLDABLE ELECTRONIC DEVICE INCLUDING SAME**

(30) Priority: 06.08.2024 KR 20240104846; 20.03.2025 KR 20250035761
(71) Applicant: Samsung Electronics Co., Ltd, Suwon-si, Gyeonggi-do 16677 (KR)
(72) Inventor: KIM, Hyunmuk, Suwon-si, Gyeonggi-do 16677 (KR); KIM, Sunglak, Suwon-si, Gyeonggi-do 16677 (KR); RYU, Jooyeol, Suwon-si, Gyeonggi-do 16677 (KR); JANG, Gyudae, Suwon-si, Gyeonggi-do 16677 (KR); JUN, Jaeyoung, Suwon-si, Gyeonggi-do 16677 (KR); JUNG, Songhee, Suwon-si, Gyeonggi-do 16677 (KR); CHOI, Sunyong, Suwon-si, Gyeonggi-do 16677 (KR); CHOI, Junyoung, Suwon-si, Gyeonggi-do 16677 (KR); CHOI, Jinwook, Suwon-si, Gyeonggi-do 16677 (KR); YOON, Byounguk, Suwon-si, Gyeonggi-do 16677 (KR); CHOI, Jinug, Suwon-si, Gyeonggi-do 16677 (KR)
(74) Representative: Gulde & Partner
(86) International application number: PCT/KR2025/011739
(87) International publication number: WO 2026/034996

(57) **Abstract**

Disclosed are a support plate (240) for supporting a flexible display (220) of a foldable electronic device (200), and a foldable electronic device (200) comprising a flexible display (220) and a support plate (240) supporting the flexible display (220). In order to facilitate using the foldable electronic device (200) with a pen, sensing wires are also added to flexible parts (244, 245, 1214, 1215) of the support plate (240).

## Description

### [Technical Field]

Embodiments of the present disclosure relate to a flexible plate including digitizer sensing wiring, and a foldable electronic device including the same.

### [Background Art]

Electronic devices are pursuing thinness, lightweight, miniaturization, and multifunctionality, and displays and various components are being deployed in electronic devices to achieve this. With the advancement of display technology, research and development of electronic devices including displays (or flexible displays) is actively underway. An electronic device may include a display (or a flexible display), and a digitizer may be applied to convert analog coordinates (e.g., position) of an electronic pen (e.g., a stylus pen) to digital data.

The above is provided as background information only to aid in understanding the embodiments of the present disclosure. No determination has been made, and no claim is made, as to whether any of the above may be applied as related art with respect to the present disclosure.

### [Disclosure of Invention]

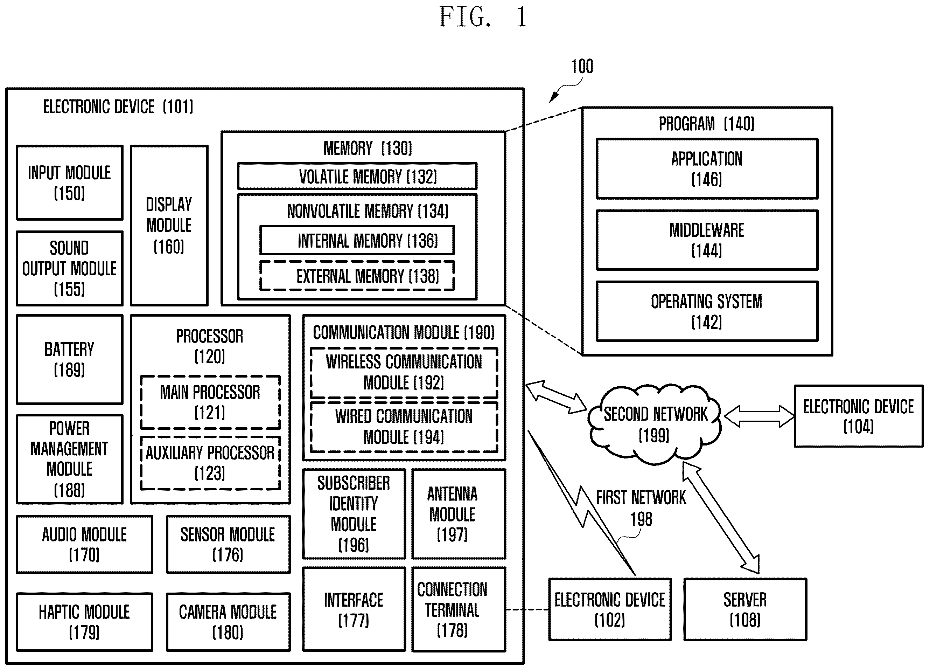

The electronic device may include a digitizer for detecting input (e.g., touch input or hovering input) from the electronic pen (e.g., the stylus pen). For example, the digitizer may convert analog coordinates (e.g., position) of the electronic pen (e.g., the stylus pen) to digital coordinate data. The digitizer may pass the digital coordinate data to a processor (e.g., the processor 120 of FIG. 1). For example, an electronic pen (e.g., a stylus pen) may include a passive electromagnetic resonance (EMR) electronic pen.

The foldable electronic device may be thickened to include a flexible plate for supporting the foldable display (e.g., the flexible display) and a digitizer for detecting coordinates of the electronic pen (e.g., the stylus pen). In the case of a foldable electronic device, a detachable digitizer may be adapted to the folding structure, and a plurality of connectors may be disposed to connect the detachable digitizer to the driving circuit, which may result in a complex structure and increased manufacturing cost.

A foldable or multi-foldable electronic device usually includes at least one, two or more hinge parts and can be divided into at least two and e.g. three display parts so that the foldable display (e.g., the flexible display) can be folded at least once or twice or more often, and the multi-detachable digitizer is usually divided into at least two, three or more digitizer parts so that the multi-detachable digitizer can be folded twice. As a result, a plurality of connectors may be disposed to connect the multi-detachable digitizer to the driving circuit, which may result in a complex structure and increased manufacturing cost.

The multi-foldable electronic device may include a first hinge part (e.g., a narrow hinge part) and a second hinge part (e.g., a wide hinge part) for multi-folding of the housing structure and the foldable display. The electronic pen may obtain coordinates using a digitizer, but in the area of the digitizer corresponding to the first hinge part (e.g., the narrow hinge part) and the second hinge part (e.g., the wide hinge part), the sensing signal of the electronic pen may be weak, and obtaining the coordinates may be limited because of the increased noise.

The present disclosure may provide a flexible plate including digitizer sensing wiring suitable for a multi-foldable structure, and a foldable electronic device including the same.

The present disclosure may provide a detachable digitizer (e.g., a multi-detachable digitizer) suitable for a multi-foldable structure, and a foldable electronic device including the same.

The present disclosure may provide a foldable electronic device capable of obtaining coordinates of an electronic pen in an area corresponding to a first hinge part (e.g., a narrow hinge part) and a second hinge part (e.g., a wide hinge part) of the multi-foldable electronic device.

The technical problems to be achieved in this document are not limited to the technical problems mentioned above, and may be expanded in various ways without departing from the scope of the present disclosure. Other technical problems not mentioned can be clearly understood by a person having ordinary knowledge in the technical field to which this document belongs from the description below.

According to an aspect of the disclosure, a support plate according to claim 1 for supporting a foldable display of an electronic device is provided. According to another aspect of the disclosure, an electronic device with a foldable or flexible display supported by the support plate according to claim 15 is provided. Due to the integration of the x- and y-sensing wiring forming the digitizer into the support plate, production and e.g. assembly of the electronic device may be facilitated. Due to the integration of the x- and y-sensing wiring forming the digitizer into the support plate, the digitizer may be formed at least in part not only in or on the first, second and third plate parts, but also in or on the first and/or second flexible parts, which may improve usability of the electronic device, in particular when a user seeks to use the electronic device with an electronic pen.

The foldable electronic device according to one embodiment of the present disclosure may include: a foldable housing. The foldable housing may include a first housing part, a second housing part, and a third housing part. The foldable housing may include a first hinge structure and a second hinge structure. The first hinge structure may rotatably connect the first housing part and the second housing part. The second hinge structure may rotatably connect the second housing part and the third housing part. The foldable electronic device may comprise a flexible display. The first display may be disposed on a front surface of the first housing part, the second housing part and the third housing part. The foldable electronic device may comprise a support plate supporting the flexible display. The foldable electronic device may comprise a digitizer control circuit. The flexible display may include a first folding part and a second folding part. The support plate may include a first plate part, a second plate part, a third plate part, a first flexible part supporting the first folding part of the flexible display, and a second flexible part supporting the second folding part of the flexible display. The first flexible part may include first slits. The second flexible part may include second slits. The first flexible part and the second flexible part may include x-axis sensing wiring disposed in an x-axis direction in a first layer to form x-axis channels of a digitizer connected to the digitizer control circuit. The first flexible part and the second flexible part may include y-axis sensing wiring disposed in a y-axis direction. The y-axis direction may be orthogonal to the x-axis direction in a second layer. The second layer may be different from the first layer to form y-axis channels of the digitizer. The y-axis channels may be connected to the digitizer control circuit.

The support plate for supporting a foldable or flexible display, e.g. a foldable or flexible display of the electronic device, may include a first plate part, a second plate part, a third plate part, a first flexible part for supporting a first folding part of the flexible display, and a second flexible part for supporting a second folding part of the flexible display. The first flexible part may include first slits. The second flexible part may include second slits. The first flexible part and the second flexible part may include x-axis sensing wiring disposed in an x-axis direction in a first layer to form x-axis channels of a digitizer to be connected to a digitizer control circuit of the electronic device. The first flexible part and the second flexible part may include y-axis sensing wiring disposed in a y-axis direction to form y-axis channels of the digitizer. The y-axis direction may extend orthogonal to the x-axis direction, e.g. in a second layer different from the first layer.

A foldable electronic device according to one embodiment of the present disclosure may include two hinge parts or hinges, a foldable display (e.g., a flexible display) that may be divided into three display parts so that it can be folded twice, a multi-segmented digitizer that may be divided into three digitizer parts so that it can be folded twice, and a flexible plate for supporting the foldable display (e.g., a flexible display). A digitizer for detecting coordinates of an electronic pen (e.g., a stylus pen) may be integrated into the support plate, e.g. the support plate of claim 1.

A foldable electronic device according to one embodiment of the present disclosure may integrate a flexible plate for supporting a foldable display (e.g., a flexible display) and a digitizer for detecting coordinates of an electronic pen (e.g., a stylus pen), thereby reducing the thickness of the foldable electronic device and reducing manufacturing cost.

A foldable electronic device according to one embodiment of the present disclosure may obtain coordinates of an electronic pen in an area corresponding to a first hinge part (e.g., a narrow hinge part) and a second hinge part (e.g., a wide hinge part) of the foldable electronic device.

The effects obtainable from the present disclosure are not limited to the effects mentioned above, and other effects not mentioned will be clearly understood by a person skilled in the art to which the present disclosure belongs from the description below.

### [Brief Description of Drawings]

In connection with the description of the enclosed schematic drawings, the same or similar reference numerals may be used for identical or similar components.
FIG. 1 is a block diagram of an electronic device within a network environment according to various embodiments of the present disclosure.
FIG. 2A is a diagram illustrating a first state (e.g., an unfolded state, an expanded state) of a foldable electronic device (e.g., a multi-foldable electronic device) according to one embodiment of the present disclosure and in a perspective view.
FIG. 2B is a diagram illustrating a second state (e.g., a once-folded state, an intermediate state) of a foldable electronic device (e.g., a multi- foldable electronic device) according to one embodiment of the present disclosure and in a perspective view.
FIG. 2C is a diagram illustrating a third state (e.g., a twice-folded state, a collapsed state) of a foldable electronic device (e.g., a multi-foldable electronic device) according to one embodiment of the present disclosure and in a perspective view.
FIGS. 3 and 4 are diagrams illustrating a first hinge part (e.g., a narrow hinge part) and a second hinge part (e.g., a wide hinge part) of a foldable electronic device (e.g., a multi-foldable electronic device) according to one embodiment of the present disclosure and in cross-sectional views.
FIG. 5 is a diagram illustrating a first gear structure (e.g., a four-row gear structure) applied to a first hinge part (e.g., a narrow hinge part) and in a cross-sectional view.
FIG. 6 is a diagram illustrating a second gear structure (e.g., a six-row gear structure) applied to a second hinge part (e.g., a wide hinge part) and in a cross-sectional view.
FIG. 7 is a diagram illustrating a first plate part, a second plate part, and a third plate part of a flexible plate (e.g., a flexible plate including digitizer sensing wiring) supported by the first housing, the second housing, and the third housing and in an exploded view.
FIG. 8 is a diagram illustrating a first display part, a second display part, and a third display part of a foldable display (e.g., a flexible display) supported by the first housing, the second housing, and the third housing and in an exploded view.
FIG. 9 is a diagram illustrating a first flexible part (e.g., a first lattice part, a narrow flexible part) and a second flexible part (e.g., a second lattice part, a wide flexible part) of a flexible plate (e.g., a flexible plate including digitizer sensing wiring) according to one embodiment of the present disclosure.
FIG. 10 is a diagram illustrating a second flexible part (e.g., a second lattice part, a wide flexible part) of a flexible plate (e.g., a flexible plate including digitizer sensing wiring).
FIG. 11 is a diagram illustrating a first flexible part (e.g., a first lattice part, a narrow flexible part) and a second flexible part (e.g., a second lattice part, a wide flexible part) of a flexible plate (e.g., a flexible plate including digitizer sensing wiring) according to one embodiment of the present disclosure.
FIG. 12A is a diagram illustrating digitizer sensing wiring of a flexible plate (e.g., a flexible plate including digitizer sensing wiring) and a printed circuit board (e.g., a printed board assembly (PBA)) according to one embodiment of the present disclosure.
FIG. 12B is a diagram illustrating x-axis sensing channels formed by x-axis sensing wiring and y-axis sensing channels formed by y-axis sensing wiring disposed on a flexible plate.
FIG. 13 is a diagram illustrating a stacked structure of the digitizer sensing wiring disposed on a flexible plate (e.g., a flexible plate including digitizer sensing wiring) according to one embodiment of the present disclosure.
FIG. 14A is a diagram illustrating digitizer sensing wiring disposed on a flexible plate (e.g., a flexible plate including digitizer sensing wiring) and sensing wiring passing through a first flexible part (e.g., a narrow flexible part) according to one embodiment of the present disclosure.
FIG. 14B is a diagram illustrating digitizer sensing wiring disposed on a flexible plate (e.g., a flexible plate including digitizer sensing wiring) and sensing wiring passing through a second flexible part (e.g., a wide flexible part) according to one embodiment of the present disclosure.
FIG. 15A is a diagram illustrating that sensing wiring are disposed to avoid slits formed in a first flexible part (e.g., a first lattice part, a narrow flexible part) or a second flexible part (e.g., a second lattice part, a wide flexible part).
FIG. 15B is a diagram illustrating that sensing wiring disposed on a second flexible part (e.g., a wide flexible part) of a flexible plate are electrically connected by vias.

### [Mode for Disclosure]

The following description with reference to the attached drawings is provided to facilitate a comprehensive understanding of various embodiments of the disclosure as defined by the claims. While it includes numerous specific details to facilitate understanding, these should be considered as exemplary only. Accordingly, those skilled in the art will recognize that various changes and modifications can be made to the various embodiments described herein without departing from the scope of the disclosure. In addition, descriptions of well-known functions and configurations may be omitted for clarity and conciseness.

The terms and words used in the following description and claims are not to be limited to their literary meanings, but are merely used by the applicant to enable a clear and consistent understanding of this document. Accordingly, it should be apparent to those skilled in the art that the following description of various embodiments of this document is provided for illustrative purposes only, and is not intended to limit this document as defined by the appended claims.

The singular form should be understood to include the plural referents unless the context clearly indicates otherwise. Thus, for example, reference to "a component surface" may include reference to one or more of such surfaces.

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semisupervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to one embodiment, the display module 160 may include a foldable display (e.g., a flexible display) configured to be folded or unfolded.

For example, a foldable display may be folded once by dividing the entire surface into two areas. If the foldable display is folded once, the foldable electronic device may include one hinge part.

For example, a foldable display may be folded twice by dividing the entire surface into three areas. If the foldable display is folded twice, the foldable electronic device may include two hinge parts.

The electronic device 101 of FIG. 1 may include a touch circuit including a touch sensor and a touch sensor IC (integrated circuit).

The electronic device 101 of FIG. 1 may include an electronic pen (e.g., a stylus pen) and a flexible plate including digitizer sensing wiring (e.g., a digitizer flexible plate).

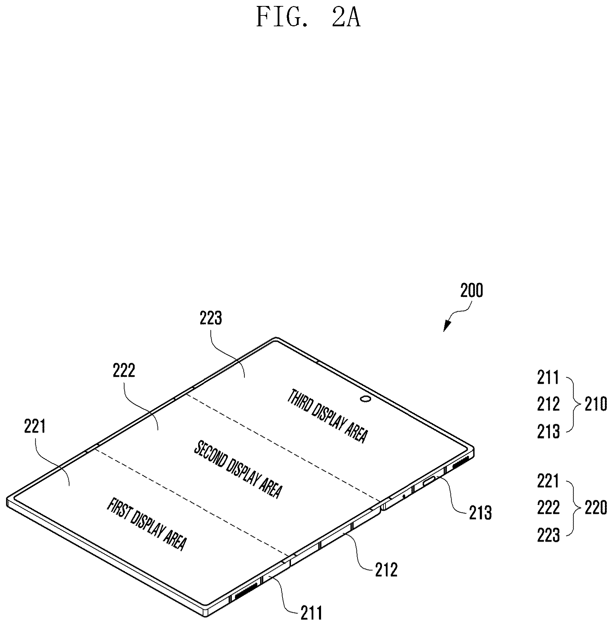

FIG. 2A is a diagram illustrating a first state (e.g., an unfolded state, an expanded state) of a foldable electronic device (e.g., a multi-foldable electronic device) according to one embodiment of the present disclosure.

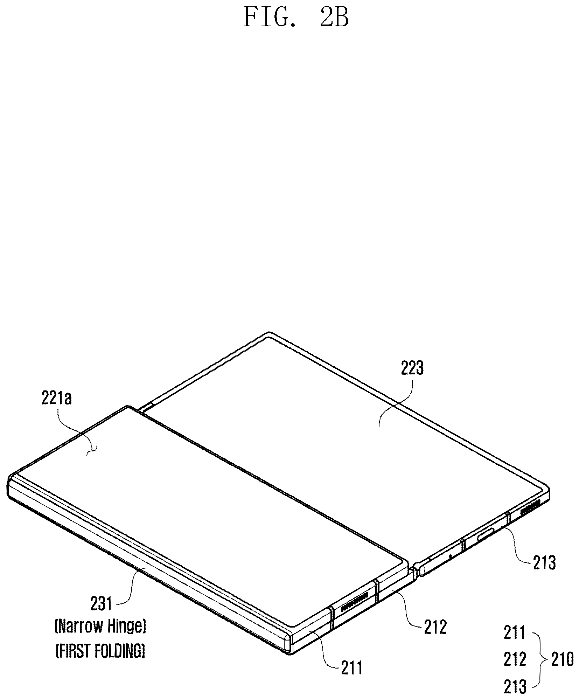

FIG. 2B is a diagram illustrating a second state (e.g., a once-folded state, an intermediate state) of a foldable electronic device (e.g., a multi- foldable electronic device) according to one embodiment of the present disclosure.

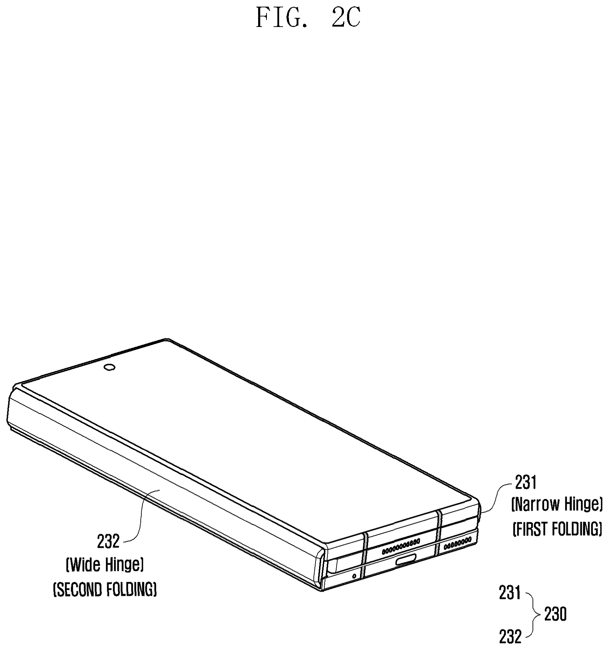

FIG. 2C is a diagram illustrating a third state (e.g., a twice-folded state, a collapsed state) of a foldable electronic device (e.g., a multi-foldable electronic device) according to one embodiment of the present disclosure.

With reference to FIGS. 2A to 2C, the foldable electronic device 200 (e.g., the multi-foldable electronic device) according to one embodiment of the present disclosure may include at least a part of the electronic device 101 of FIG. 1.

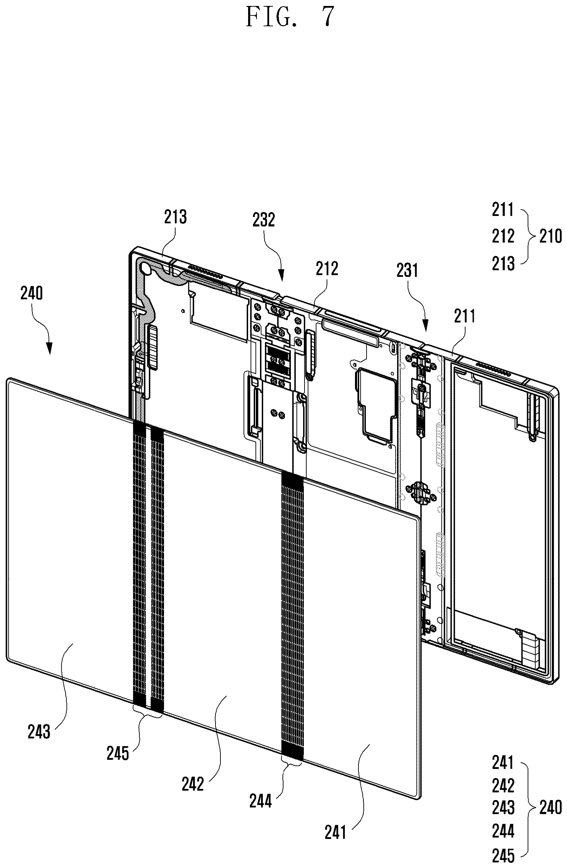

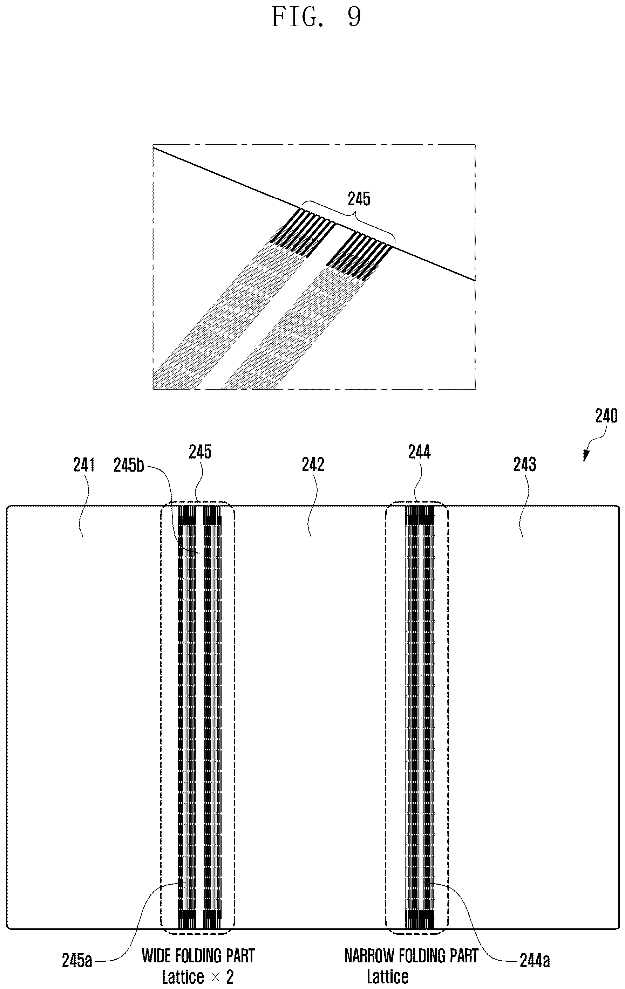

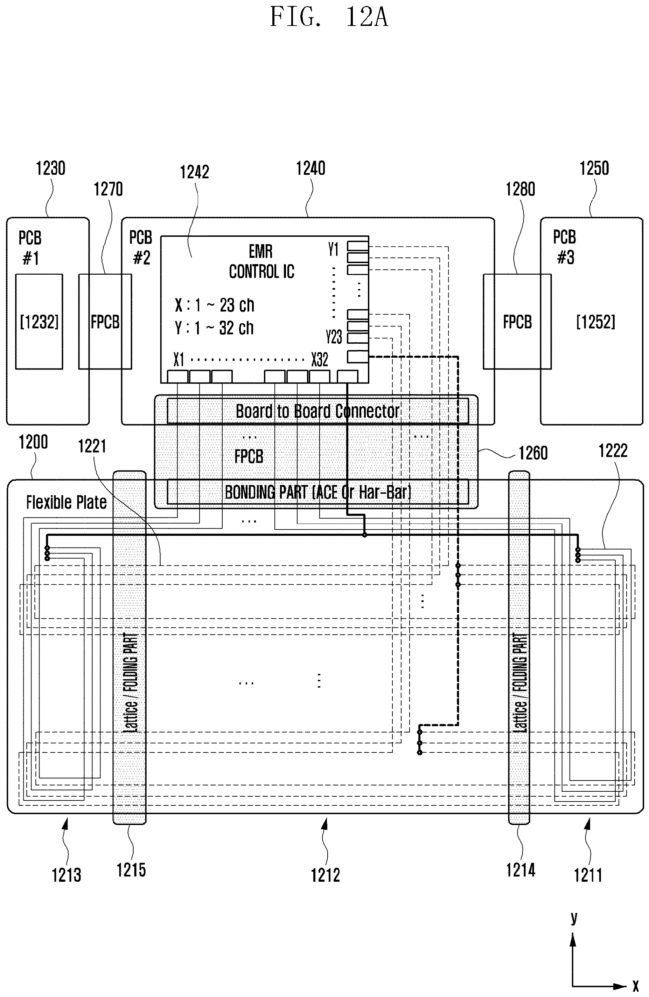

With reference to FIGS. 2A to 2C, a foldable electronic device 200 (e.g., a multi-foldable electronic device) according to one embodiment of the present disclosure may include a housing structure 210, a foldable display 220 (e.g., a flexible display), a plurality of hinge parts 230, and a flexible plate (e.g., the flexible plate 240 of FIGS. 7 and 9). For example, the flexible plate 240 may include digitizer sensing wiring (e.g., the digitizer sensing wiring 1221 and 1222 of FIG. 12A). A description of the flexible plate 240 will be described later with reference to FIGS. 7 to 15.

For example, the flexible plate 240 and the foldable display 220 may be disposed in an inner space of the housing structure 210. The foldable display 220 may be supported by the housing structure 210 and the flexible plate 240.

For example, the housing structure 210 may be formed so that the foldable electronic device 200 (e.g., a multi-foldable electronic device) can be folded twice. The housing structure 210 may include a first housing part 211, a second housing part 212, and a third housing part 213.

For example, the foldable display 220 may include a first display part 221 (a first display area), a second display part 222 a (the second display area), and a third display part 223 (a third display area).

For example, the first display part 221 (the first display area) of the foldable display 220 may be disposed in an inner space of the first housing part 211. The first display part 221 (the first display area) of the foldable display 220 may be supported by the first housing part 211.

For example, the second display part 222 (the second display area) of the foldable display 220 may be disposed in an inner space of the second housing part 212. The second display part 222 (the second display area) of the foldable display 220 may be supported by the second housing part 212.

For example, the third display part 223 (the third display area) of the foldable display 220 may be disposed in an inner space of the third housing part 213. The third display part 223 (the third display area) of the foldable display 220 may be supported by the third housing part 213.

For example, the plurality of hinge parts 230 may include a first hinge part 231 (e.g., a narrow hinge part), and a second hinge part 232 (e.g., a wide hinge part).

For example, the first hinge part 231 (e.g., a narrow hinge part) may be disposed between the first housing part 211 and the second housing part 212 so that the first housing part 211 and the second housing part 212 can be folded or unfolded. A first surface of the first hinge part 231 (e.g., the narrow hinge part) may be connected to the first housing part 211, and a second surface of the first hinge part 231 (e.g., the narrow hinge part) may be connected to the second housing part 212.

For example, the second hinge part 232 (e.g., a wide hinge part) may be disposed between the second housing part 212 and the third housing part 213 so that the second housing part 212 and the third housing part 213 may be folded or unfolded. A first surface of the second hinge part 232 (e.g., the wide hinge part) may be connected to the second housing part 212, and a second surface of the second hinge part 232 (e.g., the wide hinge part) may be connected to the third housing part 213.

According to one embodiment, the foldable electronic device 200 (e.g., the multi-foldable electronic device) according to one embodiment of the present disclosure may be in a first state (e.g., an unfolded state, an expanded state), wherein the first housing part 211, the second housing part 212, and the third housing part 213 are all unfolded.

For example, the foldable electronic device 200 (e.g., the multi-foldable electronic device) according to one embodiment of the present disclosure may be in an unfolded state (e.g., a first state, an expanded state). For example, as shown of FIG. 2a, the first display part 221 (the first display area), the second display part 222 (the second display area), and the third display part 223 (the third display area) of the foldable display 220 may all be unfolded to maximize the screen size.

According to one embodiment, the foldable electronic device 200 (e.g., the multi-foldable electronic device) according to one embodiment of the present disclosure may be in a second state (e.g., a once-folded state, an intermediate state).

For example, the foldable electronic device 200 (e.g., the multi-foldable electronic device) according to one embodiment of the present disclosure may be folded so that the first housing part 211 and the second housing part 212 are proximate by the first hinge part 231 (e.g., a narrow hinge part), as shown of FIG. 2b. In the present disclosure, the state in which the first housing part 211 and the second housing part 212 are folded into proximity by the first hinge part 231 (e.g., a narrow hinge part) may be defined as a first folding state.

For example, in a second state (e.g., a once-folded state, an intermediate state) of the foldable electronic device 200 (e.g., the multi-foldable electronic device) according to one embodiment of the present disclosure, the first display part 221 (the first display area) and the second display part 222 (the second display area) of the foldable display 220 may be disposed so as to be in close proximity to each other (e.g., touching each other).

According to one embodiment, the foldable electronic device 200 (e.g., the multi-foldable electronic device) according to one embodiment of the present disclosure may be in a third state (e.g., a twice-folded, a collapsed state).

For example, the foldable electronic device 200 (e.g., the multi-foldable electronic device) according to one embodiment of the present disclosure may be in a first folding state in which the first housing part 211 and the second housing part 212 are folded into proximity by the first hinge part 231 (e.g., a narrow hinge part), and further the second housing part 212 and the third housing part 213 are folded into proximity by the second hinge part 232 (e.g., a wide hinge part). In the present disclosure, the state in which the second housing part 212 and the third housing part 213 are folded into proximity by the second hinge part 232 (e.g., a wide hinge part) may be defined as a second folding state. For example, the third display part 223 (the third display area) of the foldable display 220 and the rear surface 221a (e.g., the back surface) of the first housing part 211 may be disposed so as to be in close proximity to each other (e.g., touching each other).

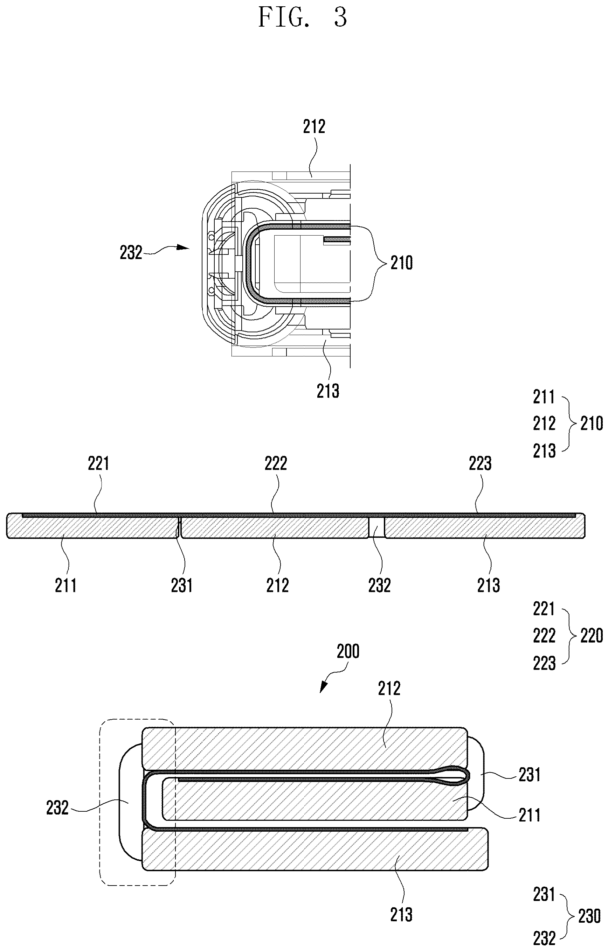

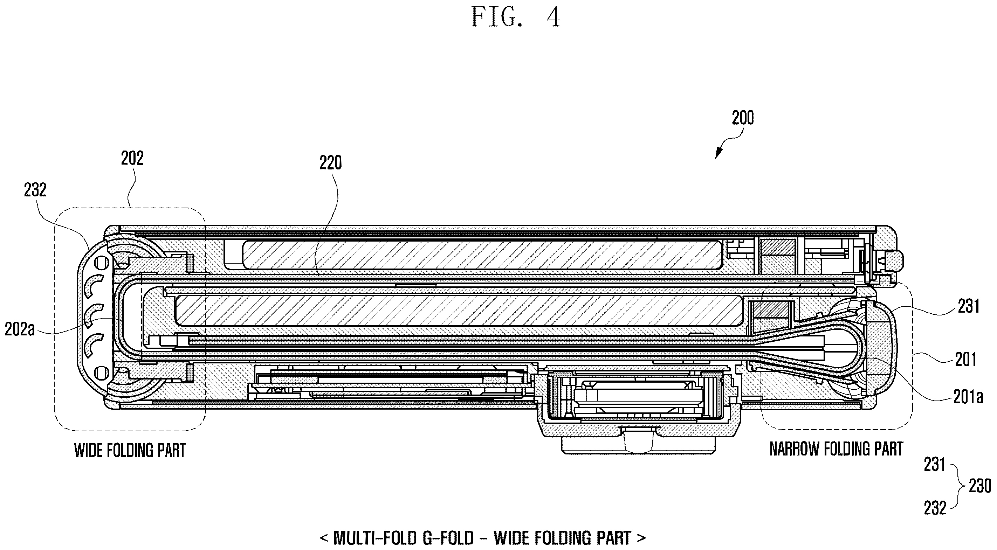

FIGS. 3 and 4 are diagrams illustrating a first hinge part (e.g., a narrow hinge part) and a second hinge part (e.g., a wide hinge part) of a foldable electronic device (e.g., a multi-foldable electronic device) according to one embodiment of the present disclosure.

With reference to FIGS. 3 and 4, when the foldable electronic device 200 (e.g., the multi-foldable electronic device) according to one embodiment of the disclosure is in the second folding state, the first housing part 211 may be positioned between the second housing part 212 and the third housing part 213.

According to one embodiment, when the foldable electronic device 200 (e.g., the multi-foldable electronic device) according to one embodiment of the present disclosure is in the first folding state (see FIG. 2b), the foldable display 220 may be folded once.

For example, the first hinge part 231 (a narrow hinge part) may be formed to have a relatively narrow width (e.g., a narrower width relative to the second hinge part 232) by connecting the first housing part 211 and the second housing part 212 to each other.

For example, when the foldable electronic device 200 (e.g., the multi-foldable electronic device) according to one embodiment of the present disclosure is in a first folded state, the first display part 221 (the first display area) and the second display part 222 (the second display area) of the foldable display 220 may be folded and positioned so as to be proximate to each other (e.g., substantially touching each other).

For example, looking at the first folding area 201 (narrow folding part), the folded part of the first display part 221 (the first display area) and the second display part 222 (the second display area) may be in a dumbbell shape 201a. The first folding area 201 (the narrow folding part) may have a relatively narrower width than the second folding area 202 (the wide folding part). The first folding area 201 (the narrow folding part) may fold the first display part 221 (the first display area) and the second display part 222 (the second display area) at a relatively narrow width. In the first folding state, the first display part 221 (the first display area) and the second display part 222 (the second display area) may be folded to form a dumbbell shape 201a to prevent breakage of the foldable display 220.

According to one embodiment, when the foldable electronic device 200 (e.g., a multi-foldable electronic device) according to one embodiment of the present disclosure is in the second folding state (see FIG. 2c), the foldable display 220 may be folded twice.

For example, the second hinge part 232 (a wide hinge part) may be formed to have a relatively wide width (e.g., a wide width relative to the first hinge part 231) by connecting the second housing part 212 and the third housing part 213 to each other.

For example, when the foldable electronic device 200 (e.g., a multi-foldable electronic device) according to one embodiment of the present disclosure is in a second folding state, the second hinge part 232 (e.g., a wide hinge part) may be folded to bring the second housing part 212 and the third housing part 213 into proximity. For example, the second folding may occur after the first folding, such that the second folded state may include the first folded state.

For example, looking at the second folding area 202, the folded part of the second display part 222 (the second display area) and the third display part 223 (the third display area) may be in a "U" shape 202a. The second folding area 202 (the wide folding portion) may have a relatively wider width than the first folding area 201 (the narrow folding part). The second folding area 202 (the wide folding part) may fold the second display part 222 (the second display area) and the third display part 223 (the third display area) at the relatively wide width. In the second folding state, the second display part 222 (the second display area) and the third display part 223 (the third display area) may be folded to form a "U" shape 202a.

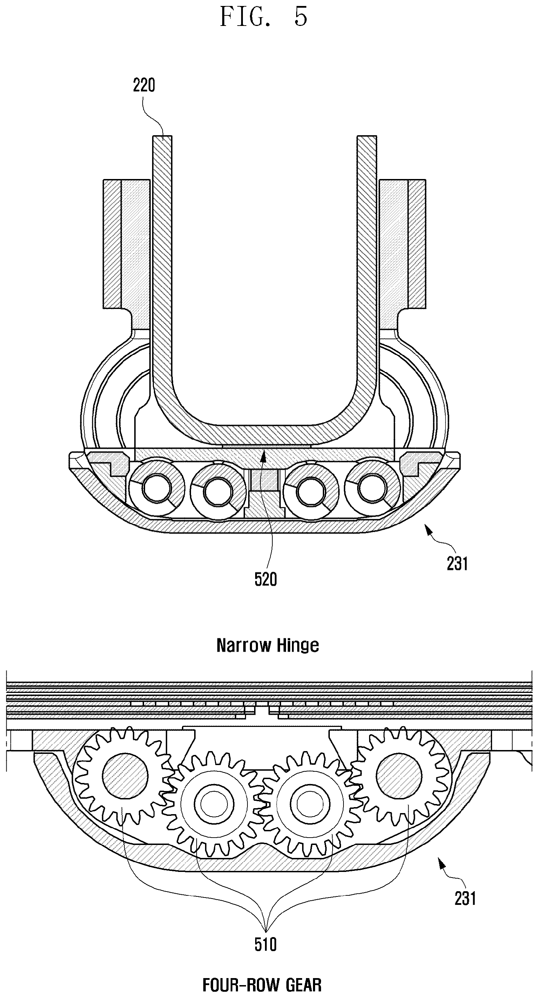

FIG. 5 is a diagram illustrating a first gear structure (e.g., a four-row gear structure) applied to a first hinge part (e.g., a narrow hinge part).

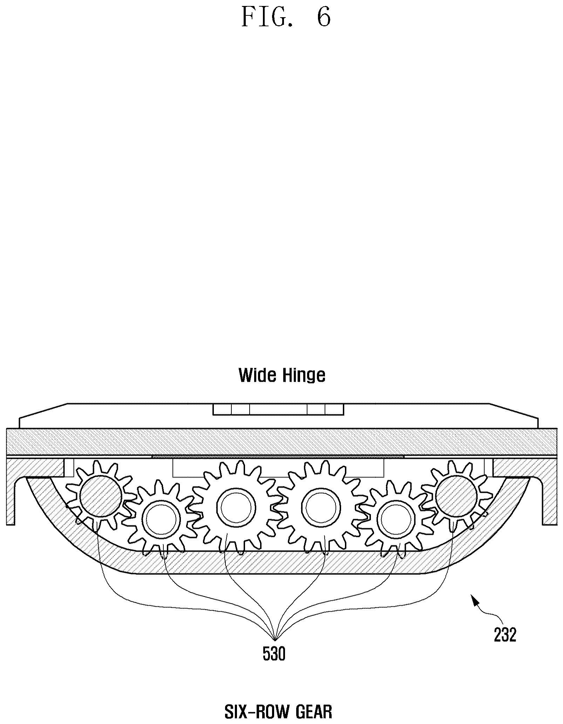

With reference to FIGS. 3, 4, and 5, according to one embodiment, the first hinge part 231 (e.g., the narrow hinge part) of the foldable electronic device 200 (e.g., the multi-foldable electronic device) according to one embodiment of the present disclosure may be formed to have a relatively narrower width than the second hinge (e.g., the second hinge part 232 of FIG. 6, the wide hinge part) by connecting the first housing part 211 and the second housing part 212 to each other.

For example, the first hinge part 231 (e.g., the narrow hinge part) may include a first gear structure 510 (e.g., a four-row gear structure) to allow the first housing part 211 and the second housing part 212 to be folded and unfolded. Of FIG. 5, the first hinge part 231 (e.g., a narrow hinge part) is shown to include a four-row gear structure. Without being limited thereto, the number of gear structures including the first hinge part 231 (e.g., a narrow hinge part) may be varied to match the size of the hinge area. For example, the first hinge part 231 (e.g., a narrow hinge part) may include a two-row gear structure, a three-row gear structure, or a fiverow gear structure.

According to one embodiment, the first hinge part 231 (e.g., a narrow hinge part) may include a first center bar 520 (a first center bar) that supports the folded part of the first housing part 211 and the second housing part 212 when the first housing part 211 and the second housing part 212 are folded.

FIG. 6 is a diagram illustrating a second gear structure (e.g., a six-row gear structure) applied to a second hinge part (e.g., a wide hinge part).

With reference to FIGS. 3, 4, and 6, according to one embodiment, the second hinge part 232 (e.g., the wide hinge part) of the foldable electronic device 200 (e.g., the multi-foldable electronic device) according to one embodiment of the present disclosure may be formed to have a relatively wide width by connecting the second housing part 212 and the third housing part 213 to each other.

For example, the second hinge part 232 (e.g., the wide hinge part) may include a second gear structure 530 (e.g., a six-row gear structure) to allow the second housing part 212 and the third housing part 213 to be folded and unfolded.

According to one embodiment, the second hinge part 232 (e.g., a wide hinge part) may include a second center bar 540 (e.g., a second center bar) that supports the folded part of the first housing part 211 and the second housing part 212 when the first housing part 211 and the second housing part 212 are folded.

FIG. 7 is a diagram illustrating a first plate part, a second plate part, and a third plate part of a flexible plate (e.g., a flexible plate including digitizer sensing wiring) supported by the first housing, the second housing, and the third housing.

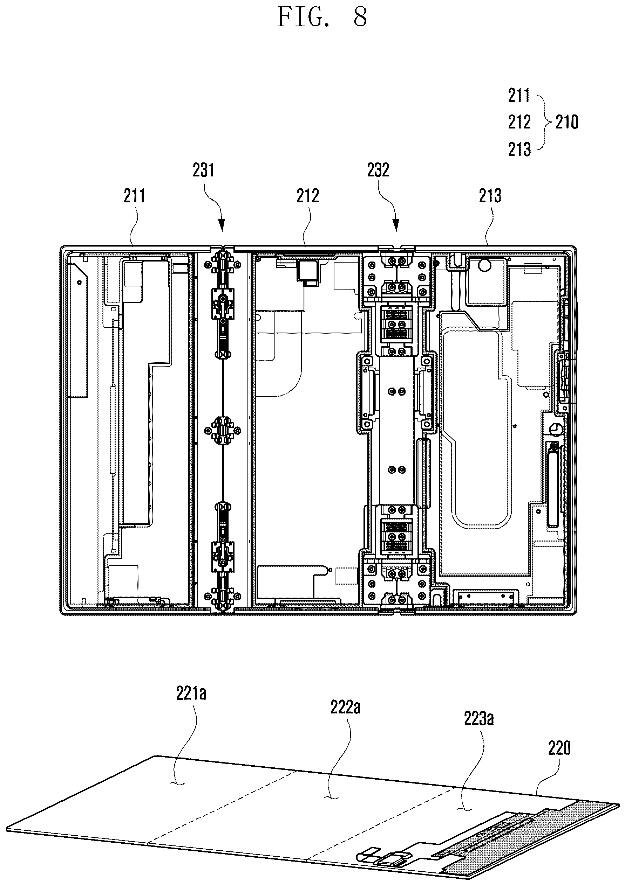

FIG. 8 is a diagram illustrating a first display part, a second display part, and a third display part of a foldable display (e.g., a flexible display) supported by the first housing, the second housing, and the third housing.

With reference to FIGS. 7 and 8, according to one embodiment, a foldable electronic device (e.g., the foldable electronic device 200 of FIG. 4, a multi-foldable electronic device) according to one embodiment of the present disclosure may include a housing structure 210, a foldable display 220 (e.g., a flexible display), a plurality of hinge parts 230 or hinges, and a flexible plate 240.

For example, a first plate part 241 of the flexible plate 240 may be disposed in an inner space of the first housing part 211 of the housing structure 210. A first display part of the foldable display 220 (e.g., the first display part 221 of FIG. 2a) may be disposed in the inner space of the first housing part 211 of the housing structure 210. The first display part 221 of the foldable display 220 may be disposed on top of the first plate part 241 of the flexible plate 240 so that the first display part 221 may be supported. FIG. 7 illustrates a rear surface 221a (e.g., a back surface) of the first display part 221.

For example, a second plate part 242 of the flexible plate 240 may be disposed in an inner space of the second housing part 212 of the housing structure 210. A second display part of the foldable display 220 (e.g., the second display part 222 of FIG. 2a) may be disposed in the inner space of the second housing part 212 of the housing structure 210. The second display part 222 of the foldable display 220 may be disposed on top of the second plate part 242 of the flexible plate 240 so that the second display part 222 may be supported. FIG. 7 illustrates a rear surface 222a (e.g., a back surface) of the second display part 222.

For example, a third plate part 243 of the flexible plate 240 may be disposed in an inner space of the third housing part 213 of the housing structure 210. A third display part of the foldable display 220 (e.g., the third display part 223 of FIG. 2a) may be disposed in the inner space of the third housing part 213 of the housing structure 210. The third display part 223 of the foldable display 220 may be disposed on top of the third plate part 243 of the flexible plate 240 so that the third display part 223 may be supported. FIG. 7 illustrates a rear surface 223a (e.g., a back surface) of the third display part.

According to one embodiment, the flexible plate 240 may include digitizer sensing wiring (e.g., digitizer sensing wiring 1221 and 1222 of FIG. 12A). For example, the digitizer sensing wiring 1221 and 1222 may be formed on the interior of the flexible plate 240 and thus not visible from the outside.

According to one embodiment, the flexible plate 240 may include a first plate part 241, a second plate part 242, a third plate part 243, a first flexible part 244 (e.g., a first support plate, a first lattice part, a narrow flexible part), and a second flexible part 245 (e.g., a second support plate, a second lattice part, a wide flexible part).

For example, the first plate part 241 may be formed as a flat plate to support the first display part 221 of the foldable display 220.

For example, the second plate part 242 may be formed as a flat plate to support the second display part 222 of the foldable display 220.

For example, the third plate part 243 may be formed as a flat plate to support the third display part 223 of the foldable display 220.

For example, a first flexible part 244 (e.g., a first lattice part, a narrow flexible part) may be disposed between the first plate part 241 and the second plate part 242.

For example, a first flexible part 244 (e.g., a first lattice part, a narrow flexible part) may be located at a part corresponding to the first hinge part 231.

For example, a second flexible part 245 (e.g., a second lattice part, a wide flexible part) may be located at a part corresponding to the second hinge part 232.

For example, a second flexible part 245 (e.g., a second lattice part, a wide flexible part) may be disposed between the second plate part 242 and the third plate part 243.

For example, a second flexible part 245 (e.g., a second lattice part, a wide flexible part) may be located at a part corresponding to the second hinge part 232.

FIG. 9 is a diagram illustrating a first flexible part (e.g., a first lattice part, a narrow flexible part) and a second flexible part (e.g., a second lattice part, a wide flexible part) of a flexible plate (e.g., a flexible plate including digitizer sensing wiring) according to one embodiment of the present disclosure.

With reference to FIGS. 3, 8, and 9, a foldable electronic device 200 (e.g., a multi-foldable electronic device) according to one embodiment of the present disclosure may include a flexible plate 240 (e.g., a flexible plate including digitizer sensing wiring).

According to one embodiment, a first flexible part 244 (e.g., a first lattice part, a narrow flexible part) of the flexible plate 240 (e.g., the flexible plate including the digitizer sensing wiring) may be formed to be flexible so that the first display part 221 and the second display part 222 of the foldable display 220 can be folded and unfolded.

For example, the first flexible part 244 (e.g., a first lattice part, a narrow flexible part) may include first slits 244a.

For example, in the first flexible part 244 (e.g., the first lattice part, the narrow flexible part), the first slits 244a may be disposed in a lattice shape at predetermined intervals. The first slits 244a may be disposed in one group.

For example, the first flexible part 244 (e.g., the first lattice part, the narrow flexible part) may be formed with a certain width (e.g., about 5 mm or at least 3 mm or up to 4 mm, up to 5 mm, up to 6 mm or up to 7 mm).

According to one embodiment, the second flexible part 245 (e.g., the second lattice part, the wide flexible part) of the flexible plate 240 (e.g., the flexible plate including the digitizer sensing wiring) may be formed to be flexible so that the second display part 222 and the third display part 223 of the foldable display 220 can be folded and unfolded.

For example, the second flexible part 245 (e.g., a second lattice part, a wide flexible part) may include second slits 245a.

For example, in the second flexible part 245 (e.g., the second lattice part, the wide flexible part), the second slits 245a may be disposed in a lattice shape at predetermined intervals. The second slits 245a may be disposed in one group or in two groups. In FIG. 9, the second slits 245a that are disposed in two groups are shown as an example.

For example, the second flexible part 245 (e.g., the second lattice part, the wide flexible part) may be formed with a certain width (e.g., about 10 mm or at least 8 mm or up to 9 mm, up to 10mm, up to 11 mm or up to 12 mm).

For example, the first flexible part 244 of the flexible plate 240 may include a planar part in which no slits (e.g., lattice) are formed.

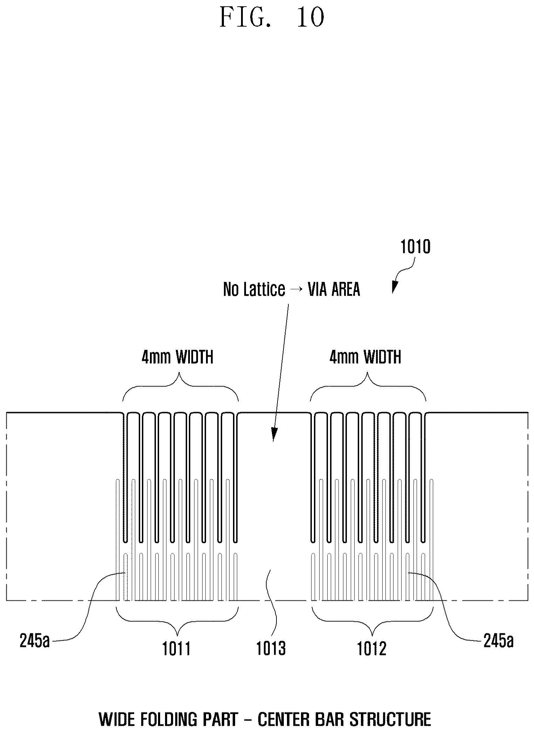

For example, the second flexible part 245 of the flexible plate 240 may include a planar part 245b (e.g., the planar area 1013 or planar part of FIG. 10) in which no slits (e.g., lattice) are formed.

FIG. 10 is a diagram illustrating a second flexible part (e.g., a second lattice part, a wide flexible part) of a flexible plate (e.g., a flexible plate including digitizer sensing wiring).

With reference to FIG. 10, according to one embodiment, a second flexible part 1010 (e.g., a second lattice part, a wide flexible part) of a flexible plate 1000 (e.g., a flexible plate including digitizer sensing wiring) may be included.

For example, the second flexible part 1010 (e.g., the second lattice part, the wide flexible part) may include second slits 245a. For example, the second slits 245a may be disposed in a lattice shape at predetermined intervals. For example, the second flexible part 1010 (e.g., the second lattice part, the wide flexible part) may be formed with a certain width (e.g., about 10 mm to 12 mm or at least 8 mm or up to 9 mm, up to 10mm, up to 11 mm, up to 12 mm, up to 13 mm or up to 14 mm).

For example, the second slits 245a may be disposed in a first area 1011 or group, and a second area 1012 or group. The first area 1011 or group and the second area 1012 or group may be disposed at predetermined intervals. The first are 1011 or group and the second area 1012 or group may be formed with a certain width (e.g., about 4 mm or at least 2 mm or up to 3 mm, up to 4 mm, up to 5 mm or up to 6 mm). The second slits 245a may be disposed at predetermined intervals in the respective area 1011, 1012 or group.

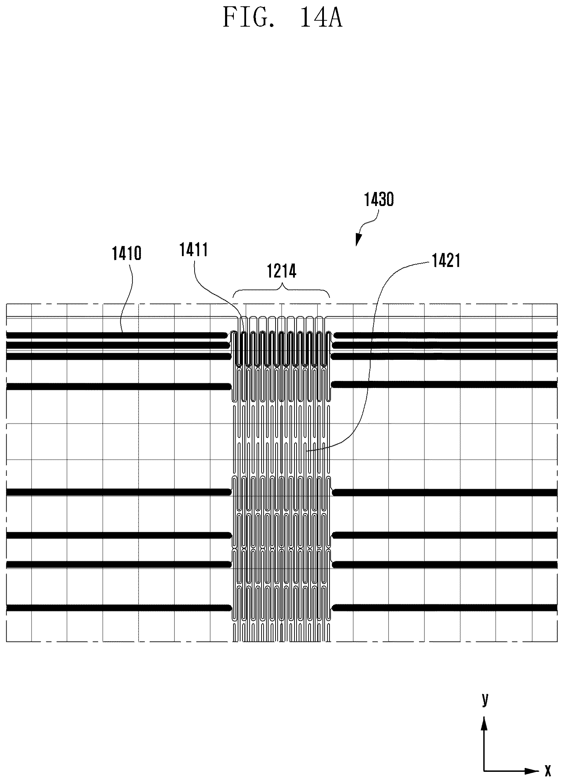

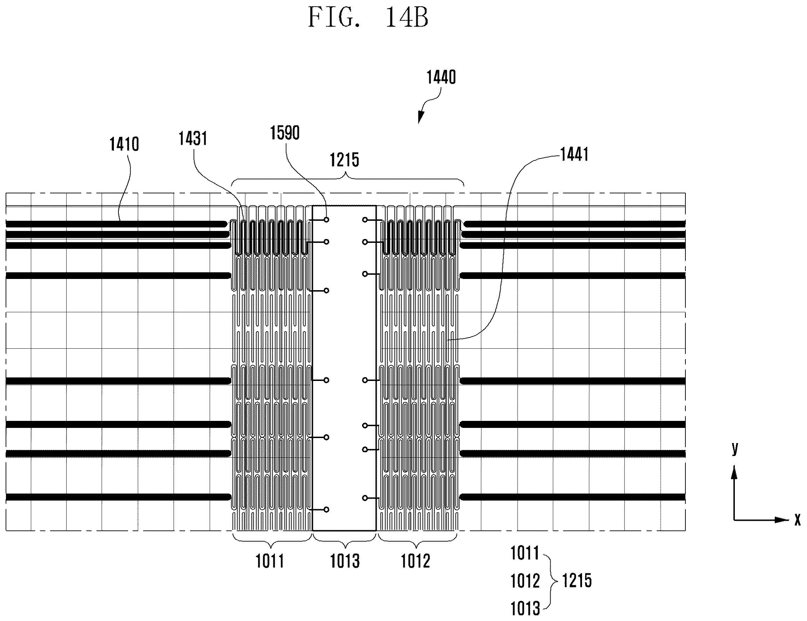

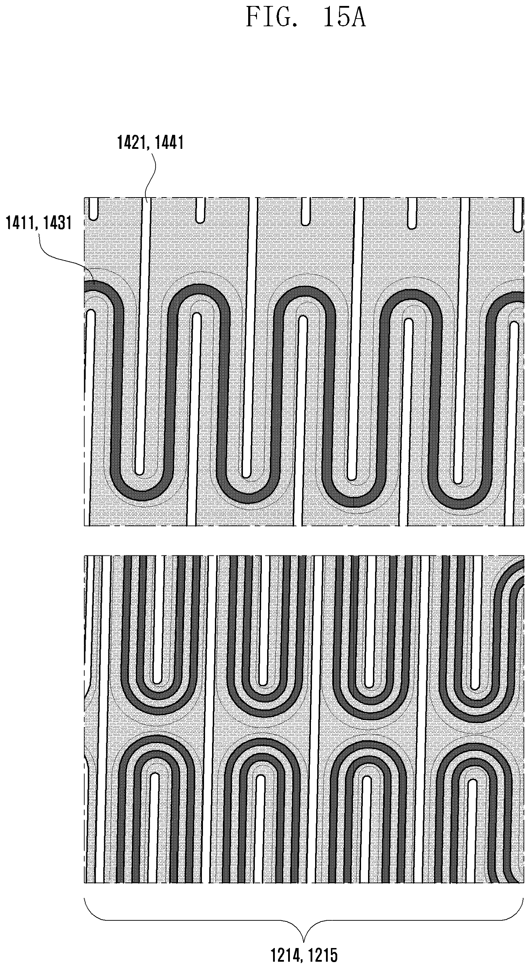

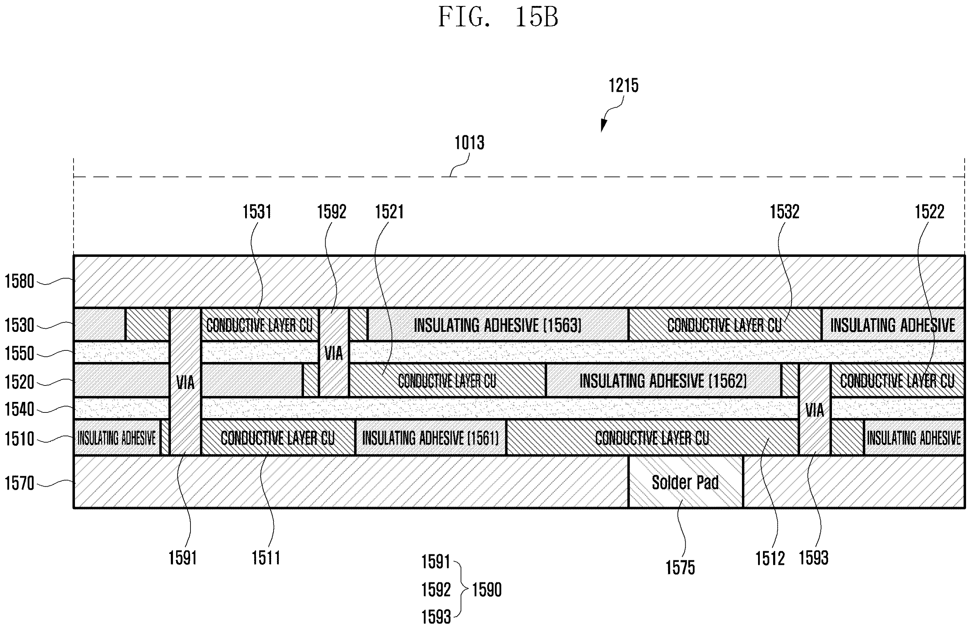

For example, a planar area 1013 (e.g., a plate part) in which the second slits 245a are not formed may be disposed between the first area 1011 or group and the second area 1012 or group. The planar area 1013 or planar part may be formed with a certain width (e.g., about 2 to 4 mm or at least 1 mm or up to 2 mm, up to 3 mm, up to 4 mm, up to 5 mm or up to 6 mm). For example, a plurality of vias (e.g., the plurality of vias 1590 of FIG. 15) for electrically connecting sensing wiring (e.g., x-axis sensing wiring 1221 and y-axis sensing wiring 1222 of FIG. 12A, x-axis sensing wiring 1410 of FIG. 14) formed in different layers may be formed in the planar area 1013 (e.g., the plate part).

For example, a center bar may be disposed to correspond to a planar area 1013 or planar part of the second flexible part 1010 (e.g., a second lattice part, a wide flexible part).

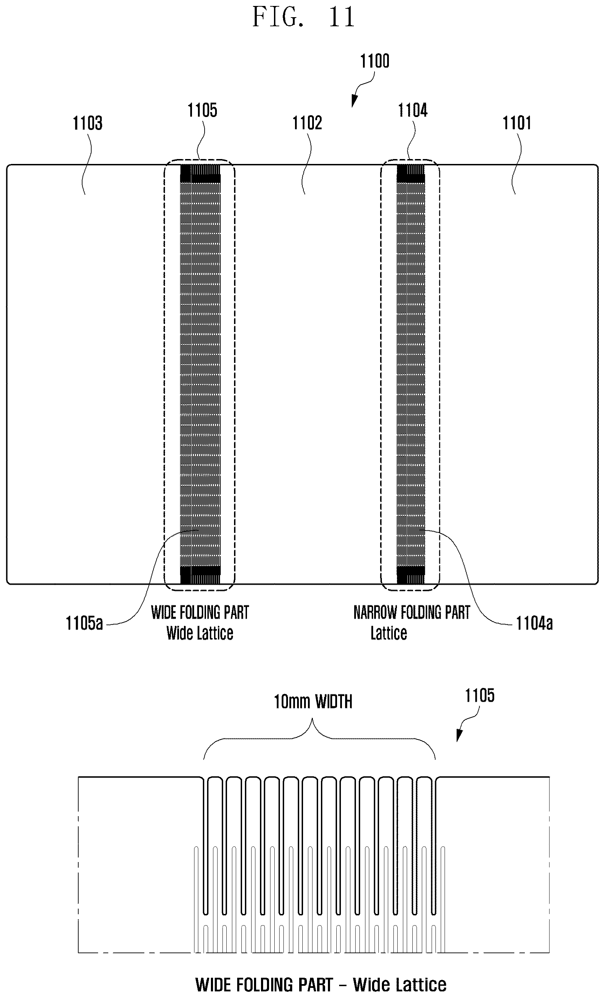

FIG. 11 is a diagram illustrating a first flexible part (e.g., a first lattice part, a narrow flexible part) and a second flexible part (e.g., a second lattice part, a wide flexible part) of a flexible plate (e.g., a flexible plate including digitizer sensing wiring) according to one embodiment of the present disclosure.

With reference to FIG. 11, a foldable electronic device (e.g., the foldable electronic device 200 of FIG. 3, a multi-foldable electronic device) according to one embodiment of the present disclosure may include a flexible plate 1100 (e.g., a flexible plate including digitizer sensing wiring).

According to one embodiment, the flexible plate 1100 (e.g., the flexible plate including the digitizer sensing wiring) may include a first plate part 1101, a second plate part 1102, a third plate part 1103, a first flexible part 1104 (e.g., a first lattice part, a narrow flexible part), and a second flexible part 1105 (e.g., a second lattice part, a wide flexible part).

For example, the flexible plate 1100 may include digitizer sensing wiring (e.g., the x-axis sensing wiring 1221, the y-axis sensing wiring1222 of FIG. 12A).

For example, a first flexible part 1104 (e.g., a first lattice part, a narrow flexible part) may be located at a part corresponding to the first hinge part (e.g., the first hinge part 231 of FIG. 7).

For example, a second flexible part 1105 (e.g., a second lattice part, a wide flexible part) may be located at a part corresponding to the second hinge part (e.g., the second hinge part 232 of FIG. 7).

For example, the first plate part 1101 may be formed as a flat plate to support a first display part (e.g., the first display part 221 of FIG. 3) of a foldable display (e.g., the foldable display 220 of FIG. 3).

For example, the second plate part 1102 may be formed as a flat plate to support a second display part (e.g., the second display part 222 of FIG. 3) of the foldable display 220.

For example, the third plate part 1103 may be formed as a flat plate to support a third display part (e.g., the third display part 223 of FIG. 3) of the foldable display 220.

For example, a first flexible part 1104 (e.g., a first lattice part, a narrow flexible part) may be disposed between the first plate part 1101 and the second plate part 1102.

For example, a first flexible part 1104 (e.g., a first lattice part, a narrow flexible part) may be disposed at a part corresponding to the first hinge part 231.

For example, a second flexible part 1105 (e.g., a second lattice part, a wide flexible part) may be disposed between the second plate part 1102 and the third plate part 1103.

For example, a second flexible part 1105 (e.g., a second lattice part, a wide flexible part) may be positioned at a part corresponding to the second hinge part 232.

According to one embodiment, the first flexible part 1104 (e.g., the first lattice part, the narrow flexible part) may be flexibly formed to allow the first display part 221 and the second display part 222 of the foldable display 220 to be folded and unfolded.

For example, to facilitate folding and unfolding of the first flexible part 1104 (e.g., the first lattice part, the narrow flexible part), the first flexible part 1104 (e.g., the first lattice part, the narrow flexible part) may include first slits 1104a.

For example, the first flexible part 1104 (e.g., the first lattice part, the narrow flexible part) may be disposed in a lattice shape at predetermined intervals. The first slits 1104a may be disposed in one group.

According to one embodiment, at least a part of the first flexible part 1104 (e.g., the first lattice part, the narrow flexible part) of the flexible plate 240 (e.g., the flexible plate including the digitizer sensing wiring) may be formed with a thickness that is less than the first plate part 1211 and/or the second plate part 1212.

According to one embodiment, the second flexible part 1105 (e.g., the second lattice part, the wide flexible part) of the flexible plate 240 (e.g., the flexible plate including the digitizer sensing wiring) may be formed to be flexible to allow the second display part 222 and the third display part 223 of the foldable display 220 to be folded and unfolded.

For example, to facilitate the folding and unfolding of the second flexible part 1105 (e.g., the second lattice part, the wide flexible part), the second flexible part 1105 (e.g., the second lattice part, the wide flexible part) may include second slits 1105a.

For example, in the second flexible part 1105 (e.g., the second lattice part, the wide flexible part), the second slits may be disposed in a lattice shape at predetermined intervals. The second slits 1105a may be disposed in one group.

For example, the first flexible part 1104 (e.g., the first support plate, the first lattice part, the narrow flexible part) may be formed with a certain width (e.g., about 5 mm or at least 3 mm or up to 4 mm, up to 5 mm, up to 6 mm or up to 7 mm).

For example, the second flexible part 1105 (e.g., the second support plate, the second lattice part, the wide flexible part) may be formed with a certain width (e.g., about 10 mm or at least 8 mm or up to 9 mm, up to 10mm, up to 11 mm or up to 12 mm).

According to one embodiment, at least a part of the second flexible part 1105 (e.g., the second lattice part, the wide flexible part) of the flexible plate 240 (e.g., the flexible plate including the digitizer sensing wiring) may be formed with a thickness that is less than the second plate part 1212 and/or the third plate part 1213.

FIG. 12A is a diagram illustrating digitizer sensing wiring of a flexible plate (e.g., a flexible plate including digitizer sensing wiring) and a printed circuit board (e.g., a printed board assembly (PBA)) according to one embodiment of the present disclosure.

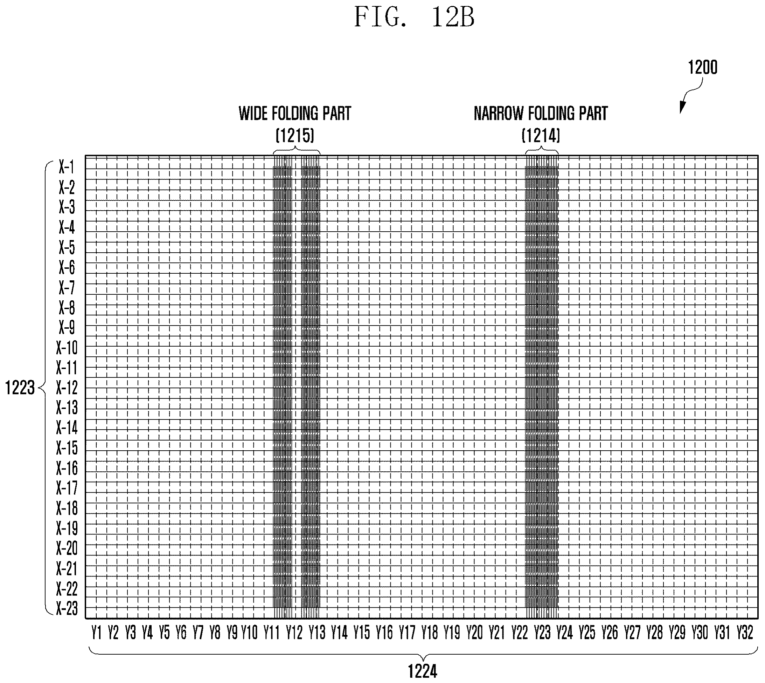

FIG. 12B is a diagram illustrating x-axis sensing channels formed by x-axis sensing wiring and y-axis sensing channels formed by y-axis sensing wiring disposed on a flexible plate.

With reference to FIGS. 12a and 12b, a foldable electronic device 200 (e.g., the foldable electronic device 200 of FIG. 3, a multi-foldable electronic device) according to one embodiment of the present disclosure may include a flexible plate 1200 (e.g., a flexible plate including digitizer sensing wiring), a plurality of printed circuit boards 1230, 1240, and 1250 (e.g., a plurality of printed board assemblies (PBAs), and a plurality of flexible printed circuit boards (FPCBs) 1260, 1270, and 1280.

According to one embodiment, the plurality of printed circuit boards 1230, 1240, and 1250 may include a first printed circuit board 1230, a second printed circuit board 1240, and a third printed circuit board 1250.

For example, the first printed circuit board 1230 may include a processor 1232 (e.g., the processor 120 of FIG. 1), and electronic components for driving the foldable electronic device 200 (the multi-foldable electronic device).

For example, the second printed circuit board 1240 may include a digitizer control circuit 1242 (an electromagnetic resonance (EMR) control IC).

For example, the third printed circuit board 1250 may include control circuits and electronic components 1252 for driving the foldable electronic device 200 (the multi-foldable electronic device).

For example, the plurality of FPCBs 1260, 1270, and 1280 may include a first FPCB 1260, a second FPCB 1270, and a third FPCB 1280.

For example, the first FPCB 1260 may electrically connect the flexible plate 1200 and the second printed circuit board 1240. For example, the first FPCB 1260 and the flexible plate 1200 may be bonded by an anisotropic conductive film (ACF) or a hot fusion diffusion bar. The first FPCB 1260 and the second printed circuit board 1240 may be electrically connected by board-to-board connectors.

For example, the second FPCB 1270 may electrically connect the first printed circuit board 1230 and the second printed circuit board 1240.

For example, the third FPCB 1280 may electrically connect the second printed circuit board 1240 and the third printed circuit board 1250.

According to one embodiment, the flexible plate 1200 may include a first plate part 1211 (e.g., the first plate part 241 of FIG. 7), a second plate part 1212 (e.g., the second plate part 242 of FIG. 7), a third plate part 1213 (e.g., the third plate part 243 of FIG. 7), a first flexible part 1214 (e.g., the first flexible part 244 of FIG. 7), and a second flexible part 1215 (e.g., the second flexible part 245 of FIG. 7).

According to one embodiment, the flexible plate 1200 may include a plurality of digitizer sensing wiring 1221 and 1222.

For example, the digitizer sensing wiring 1221 and 1222 may include x-axis sensing wiring 1221 disposed in a first direction (e.g., an x-axis direction) to form a loop, and y-axis sensing wiring 1222 disposed in a second direction (e.g., a y-axis direction) to form a loop.

For example, the x-axis sensing channels 1223 may be formed by x-axis sensing wiring 1221 disposed on the flexible plate 1200. For example, the x-axis sensing wiring 1221 may be disposed to correspond to the number of x-axis sensing channels 1223 of the digitizer (e.g., x:1-23 ch).

For example, the x-axis sensing wiring 1221 may be disposed in a first direction (e.g., an x-axis direction) starting at the first plate part 1211 and ending at the third plate part 1213. Each of the x-axis sensing wiring 1221 may be disposed to cross the first plate part 1211, the first flexible part 1214, the second plate part 1212, the second flexible part 1215, and the third plate part 1213 in a first direction (e.g., an x-axis direction).

For example, a first terminal of the x-axis sensing wiring 1221 may be electrically connected to an x-axis output terminal of the digitizer control circuit 1242. A second terminal of the x-axis sensing wiring 1221 may be electrically connected to an x-axis input terminal of the digitizer control circuit 1242.

For example, the digitizer control circuit 1242 may supply the x-axis sensing signals to the x-axis sensing wiring 1221 in a time-sliced manner. The digitizer control circuit 1242 may receive the x-axis sensing signal passing through a loop of the x-axis sensing wiring 1221 in a time-sliced manner.

For example, y-axis sensing channels 1224 may be formed by y-axis sensing wiring 1222 disposed on the flexible plate 1200. For example, the y-axis sensing wiring 1222 may be disposed to correspond to the number of y-axis sensing channels 1224 of the digitizer (e.g., y:1-32 ch).

For example, the y-axis sensing wiring 1222 may be distributed and disposed on the first plate part 1211, the second flexible part 1215, and the third plate part 1213. For example, the y-axis sensing channels 1224 (e.g., y:1-32 ch) may be distributed and disposed on the first plate part 1211, the second plate part 1212, and the third plate part 1213.

For example, a first y-axis sensing wiring of the y-axis sensing wiring 1222 may be disposed on the first plate part 1211.

For example, a second y-axis sensing wiring of the y-axis sensing wiring 1222 may be disposed beginning at the end of the first plate part 1211 and extending through the first flexible part 1214 to the beginning of the second plate part 1212.

For example, a third y-axis sensing wiring of the y-axis sensing wiring 1222 may be disposed beginning at the end of the second plate part 1212 and extending through the second flexible part 1215 to the beginning of the third plate part 1213.

For example, a fourth y-axis sensing wiring of the y-axis sensing wiring 1222 may be disposed beginning at the beginning of the third plate part 1213 and extending to the end of the third plate part 1213.

For example, a first terminal of each of the y-axis sensing wiring 1222 may be electrically connected to a y-axis output terminal of the digitizer control circuit 1242. A second terminal of each of the y-axis sensing wiring 1222 may be electrically connected to the y-axis input terminal 1232d of the digitizer control circuit 1242.

For example, in the case that 23 x-axis sensing channels 1223 (e.g., x-axis loop) are formed by the x-axis sensing wiring 1221, the y-axis length of the flexible plate 1200 may be about 150 mm or at least 100 mm, up to 110 mm, up to 120 mm, up to 130 mm, up to 140 mm, up to 150 mm, up to 160 mm, up to 170 mm or up to 180 mm. For example, in the case that 23 x-axis sensing channels 1223 (e.g., x-axis loop) are formed by the x-axis sensing wiring 1221, each of the x-axis sensing channels 1223 (e.g., x-axis loop) may be spaced about 6.5 mm or at least 4.5 mm, up to 5.5 mm, up to 6.5 mm, up to 7.5 mm or up to 8.5 mm apart.

For example, in the case that 32 y-axis sensing channels 1224 (e.g., y-axis loop) are formed by the y-axis sensing wiring 1222, the x-axis length of the flexible plate 1200 may be about 205 mm or at least 170 mm, up to 175 mm, up to 185 mm, up to 195 mm, up to 200 mm, up to 205 mm, up to 210 mm, up to 215 mm or up to 220 mm. For example, in the case that 32 y-axis sensing channels 1224 (e.g., x-axis loop) are formed by the y-axis sensing wiring 1222, each of the y-axis sensing channels 1224 (e.g., y-axis loop) may be spaced about 6.5 mm apart or at least 4.5 mm, up to 5.5 mm, up to 6.5 mm, up to 7.5 mm or up to 8.5 mm.

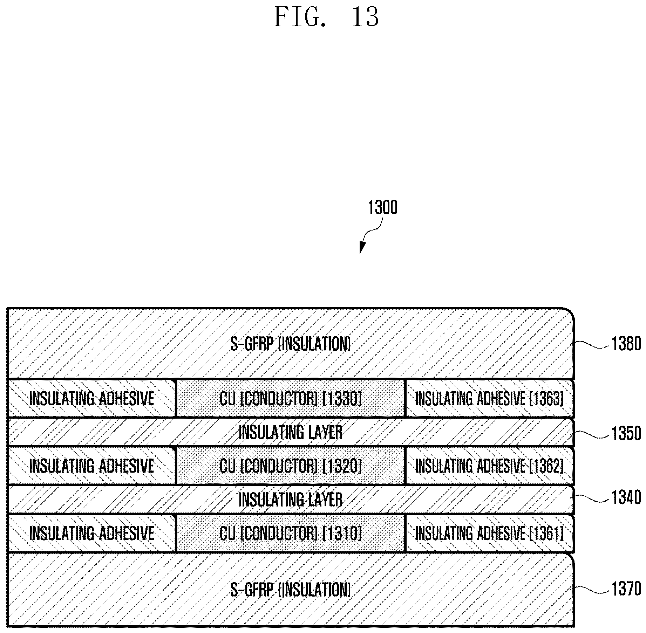

FIG. 13 is a diagram 1300 illustrating a stacked structure of the digitizer sensing wiring disposed on a flexible plate (e.g., a flexible plate including digitizer sensing wiring) according to one embodiment of the present disclosure.

With reference to FIGS. 12a and 13, a flexible plate 1200 (e.g., a flexible plate including digitizer sensing wiring) according to one embodiment of the present disclosure may include a first wiring layer 1310, a second wiring layer 1320, a third wiring layer 1330, a first insulating layer 1340, a second insulating layer 1350, a lower substrate layer 1370, and an upper substrate layer 1380.

For example, the flexible plate 1200 may have x-axis sensing wiring 1221 and y-axis sensing wiring 1222 disposed on the flexible plate 1200. Since both the x-axis sensing wiring 1221 and the y-axis sensing wiring 1222 may not be disposed on a single wire layer, the x-axis sensing wiring 1221 and the y-axis sensing wiring 1222 may be distributed across a plurality of wire layers 1310, 1320, and 1330. For example, the x-axis sensing wiring 1221 may form a channel in the x-axis direction (e.g., an x-axis loop) and the y-axis sensing wiring 1222 may form a channel in the y-axis direction (e.g., a y-axis loop).

According to one embodiment, the x-axis sensing wiring 1221 and the Y-axis sensing wiring 1222 may be formed in different layers within the flexible plate 1200.

For example, the x-axis sensing wiring 1221 may be disposed in the first wiring layer 1310. Without being limited thereto, the y-axis sensing wiring 1222 may also be disposed in the first wiring layer 1310.

For example, the y-axis sensing wiring 1222 may be disposed in the second wiring layer 1320. Without being limited thereto, the x-axis sensing wiring 1221 may also be disposed in the second wiring layer 1320.

For example, the x-axis sensing wiring 1221 or the y-axis sensing wiring 1222 may be disposed in the third wiring layer 1330.

For example, the x-axis sensing wiring 1221 and y-axis sensing wiring 1222 may be formed of a conductive metal (e.g., copper (Cu)).

For example, other wiring than the x-axis sensing wiring 1221 and y-axis sensing wiring 1222 may be disposed in the third wiring layer 1330.

For example, a first insulating layer 1340 may be disposed between the first wiring layer 1310 and the second wiring layer 1320.

For example, a second insulating layer 1350 may be disposed between the second wiring layer 1320 and the third wiring layer 1330.

For example, the first wiring layer 1310 may be bonded to the lower substrate layer 1370 and the first insulating layer 1340 by a first insulating adhesive layer 1361.

For example, the second wiring layer 1320 may be bonded to the first insulating layer 1340 and the second insulating layer 1350 by a second insulating adhesive layer 1362.

For example, the third wiring layer 1330 may be bonded to the second insulating layer 1350 and the top substrate layer 1380 by a third insulating adhesive layer 1363.

In FIG. 13, the flexible plate 1200 is illustrated as including three wiring layers 1310, 1320, and 1330. Without being limited thereto, depending on the number of x-axis sensing channels and y-axis sensing channels formed in the flexible plate 1200, the flexible plate 1200 may include two or four wiring layers.

According to one embodiment, the lower substrate layer 1370 may be formed of glass fiber reinforced polymer (GFRP) as an insulating layer.

According to one embodiment, the upper substrate layer 1380 may be formed of a glass fiber reinforced polymer (GFRP) as an insulating layer.

For example, a shielding sheet (e.g., a magnetic metal powder (MMP) sheet) for shielding electromagnetic signals may be disposed on the underside of the lower substrate layer 1370. For example, a foldable display (e.g., the foldable display 220 of FIGS. 2a and 3) may be disposed on the top of the upper substrate layer 1380.

FIG. 14A is a diagram 1430 illustrating digitizer sensing wiring disposed on a flexible plate (e.g., a flexible plate including digitizer sensing wiring) and sensing wiring passing through a first flexible part (e.g., a narrow flexible part) according to one embodiment of the present disclosure.

FIG. 14B is a diagram 1440 illustrating digitizer sensing wiring disposed on a flexible plate (e.g., a flexible plate including digitizer sensing wiring) and sensing wiring passing through a second flexible part (e.g., a wide flexible part) according to one embodiment of the present disclosure.

FIG. 15A is a diagram illustrating that sensing wiring are disposed to avoid slits formed in a first flexible part (e.g., a first lattice part, a narrow flexible part) or a second flexible part (e.g., a second lattice part, a wide flexible part).

With reference to FIGS. 12A, 14A, 14B, and 15A, a flexible plate 1200 applied to a multi-foldable electronic device may include a first flexible part 1214 (e.g., a first lattice part, a narrow flexible part) and a second flexible part 1215 (e.g., a second lattice part, a wide flexible part).

For example, the first flexible part 1214 may correspond to a first hinge (e.g., the first hinge part 231 of FIGS. 2c and 7, a narrow hinge part).

For example, the second flexible part 1215 may correspond to a second hinge (e.g., the second hinge part 232 of FIGS. 2c and 7, a wide hinge part).

The x-axis sensing wiring 1410 (e.g., the x-axis sensing wiring 1221 of FIG. 12A) disposed on a flexible plate 1200 (e.g., a flexible plate including digitizer sensing wiring) according to one embodiment of the present disclosure may be disposed to cross a first plate part 1211, a first flexible part 1214, a second plate part 1212, a second flexible part 1215, and a third plate part 1213 in a first direction (e.g., an x-axis direction).

As shown in FIG. 14A, first slits 1421 may be formed in the first flexible part 1214. Since the place where the first slits 1421 are formed in the first flexible part 1214 is an empty space, the x-axis sensing wiring 1410 cannot pass through in a straight line. The x-axis sensing wiring 1410 may be disposed to avoid the area where the first slits 1421 are formed in the first flexible part 1214.

For example, in the first flexible part 1214, the x-axis sensing wiring 1410 may be disposed in a meandering shape 1411 avoiding the part where the first slits 1421 are formed. This allows the x-axis sensing wiring 1410 to pass through the first flexible part 1214 while avoiding the slits 1421.

As shown in FIG. 14B, the second flexible part 1214 (e.g., a wide flexible part) may include second slits 1441 (e.g., the second slits 245a of FIG. 9).

For example, the second slits 1441 may be disposed in a first area 1011 or group and a second area 1012 or group. The first area 1011 or group and the second area 1012 or group may be disposed at predetermined intervals. For example, a planar area 1013 (e.g., a plate part) in which the second slits 1441 are not formed may be disposed between the first area 1011 or group and the second area 1012 or group. The second slits 1441 may be disposed at predetermined intervals in the respective area 1011, 1012 or group.

For example, since the place where the second slits 1441 are formed in the second flexible part 1215 is an empty space, the x-axis sensing wiring 1410 cannot pass through in a straight line. The x-axis sensing wiring 1410 may be disposed to avoid the area where the second slits 1441 are formed in the second flexible part 1215.

For example, in the second flexible part 1215, the x-axis sensing wiring 1410 may be disposed in a meandering shape 1431 avoiding the part where the second slits 1441 are formed. This allows the x-axis sensing wiring 1410 to pass through the second flexible part 1215 while avoiding the second slits 1441.

For example, the planar area 1013 (e.g., the plate part) may be disposed with a plurality of vias 1590 for electrically connecting the x-axis sensing wiring 1410 disposed in different layers. In the description with reference to FIGS. 14a, 14b, and 15a, it has been described that the x-axis sensing wiring 1410 is disposed in a meandering shape 1411 and 1431 avoiding the areas where the first slits 1421 and the second slits 1441 are formed in the first flexible part 1214 and the second flexible part 1215.

Without being limited thereto, the y-axis sensing wiring (e.g., the y-axis sensing wiring 1222 of FIG. 12) formed in the second wiring layer (e.g., the second wiring layer 1320 of FIG. 13) of the first flexible part 1214 and the second flexible part 1215 may also be disposed in the first flexible part 1214 and the second flexible part 1215 avoiding the areas where the first slits 1421 and the second slits 1441 are formed.

Without being limited thereto, the x-axis sensing wiring (e.g., the x-axis sensing wiring 1221 of FIG. 12) or the y-axis sensing wiring (e.g., the y-axis sensing wiring 1222 of FIG. 12) formed in the third wiring layer (e.g., the third wiring layer 1330 of FIG. 13) of the first flexible part 1214 and the second flexible part 1215 may also be disposed on the first flexible part 1214 and the second flexible part 1215 avoiding the areas where the first slits 1421 and the second slits 1441 are formed.

FIG. 15B is a diagram illustrating that sensing wiring disposed on a second flexible part (e.g., a wide flexible part) of a flexible plate are electrically connected by vias.

With reference to FIGS. 12A and 15B, a flexible plate 1200 (e.g., a flexible plate including digitizer sensing wiring) according to one embodiment of the present disclosure may include a first wiring layer 1510, a second wiring layer 1520, a third wiring layer 1530, a first insulating layer 1540, a second insulating layer 1550, a lower substrate layer 1570, a solder pad 1575, and an upper substrate layer 1580.

For example, the flexible plate 1200 may include x-axis sensing wiring 1221 and y-axis sensing wiring 1222 disposed on the flexible plate 1200. Because of the plurality of x-axis sensing wiring 1221 and y-axis sensing wiring 1222, there are limitations to disposing all wiring 1221 and 1222 in a single wiring layer. The x-axis sensing wiring 1221 and y-axis sensing wiring 1222 may be distributed across a plurality of wiring layers 1510, 1520, and 1530. Within the flexible plate 1200, the x-axis sensing wiring and the y-axis sensing wiring may be formed in different layers.

As shown in FIG. 15B, according to one embodiment, the x-axis sensing wiring 1511 and 1512 may be disposed on the first wiring layer 1510 in the second flexible part 1215 (e.g., a wide flexible part). Without being limited thereto, the y-axis sensing wiring 1511 and 1512 may also be disposed on the first wiring layer 1510.

For example, in a second flexible part 1215 (e.g., a wide flexible part), the x-axis sensing wiring 1521 and 15232 may be disposed in a second wiring layer 1520. Without being limited thereto, the y-axis sensing wiring 1521 and 15232 may also be disposed on the second wiring layer 1520.

For example, the x-axis sensing wiring 1531 and 1532 may be disposed in a third wiring layer 1530 in the second flexible part 1215 (e.g., a wide flexible part). Without being limited thereto, the y-axis sensing wiring 1531 and 1532 may also be disposed on the third wiring layer 1530.

For example, the x-axis sensing wiring 1511, 1512, 1521, 1522, 1531, and 1532, and the y-axis sensing wiring 1222 may be formed of a conductive metal (e.g., copper (Cu)).

For example, wiring other than the x-axis sensing wiring 1511, 1512, 1521, 1522, 1531, and 1532 and the y-axis sensing wiring 1222 may be disposed in the second flexible part 1215 (e.g., a wide flexible part).

According to one embodiment, a first insulating layer 1540 may be disposed between the first wiring layer 1510 and the second wiring layer 1520 in the second flexible part 1215 (e.g., a wide flexible part).

According to one embodiment, a second insulating layer 1550 may be disposed between the second wiring layer 1520 and the third wiring layer 1530 in the second flexible part 1215 (e.g., a wide flexible part).

According to one embodiment, in the second flexible part 1215 (e.g., a wide flexible part), the first wiring layer 1510 may be bonded to the lower substrate layer 1570 and the first insulating layer 1540 by an insulating adhesive layer 1561.

According to one embodiment, in the second flexible part 1215 (e.g., a wide flexible part), the second wiring layer 1520 may be bonded to the first insulating layer 1540 and the second insulating layer 1550 by a second insulating adhesive layer 1562.

According to one embodiment, in the second flexible part 1215 (e.g., a wide flexible part), the third wiring layer 1530 may be bonded to the second insulating layer 1550 and the top substrate layer 1380 by a third insulating adhesive layer 1563.

According to one embodiment, the planar area 1013 (e.g., the plate part) may include a plurality of vias 1590 for selectively connecting the x-axis sensing wiring 1511, 1512, 1521, 1522, 1531, and 1532 formed in different layers.

For example, the x-axis sensing wiring 1511 disposed in the first wiring layer 1510 and the x-axis sensing wiring 1531 disposed in the third wiring layer 1530 may be electrically connected by a first via 1591. The first via 1591 may be formed to penetrate the first insulating layer 1540, the second insulating adhesive layer 1562, and the second insulating layer 1550 to electrically connect the x-axis sensing wiring 1511 and 1531.

For example, the x-axis sensing wiring 1521 disposed in the second wiring layer 1520 and the x-axis sensing wiring 1531 disposed in the third wiring layer 1530 may be electrically connected by a second via 1592. The second via 1592 may be formed to penetrate the second insulating layer 1550 to electrically connect the x-axis sensing wiring 1521 and 1531.

For example, the x-axis sensing wiring 1512 disposed in the first wiring layer 1510 and the x-axis sensing wiring 1522 disposed in the second wiring layer 1520 may be electrically connected by a third via 1593. The third via 1593 may be formed to penetrate the first insulating layer 1540 to electrically connect the x-axis sensing wiring 1512 and 1522.

According to one embodiment, at least a part of the lower substrate layer 1570 may be removed to expose the x-axis sensing wiring 1512 disposed on the first wiring layer 1510, and the x-axis sensing wiring 1512 and the solder pads 1575 may be electrically connected.

For example, a first surface of the solder pad 1575 may be connected to the x-axis sensing wiring 1512. A second surface of the solder pad 1575 may be electrically connected to a first FPCB electrically connected to the flexible plate 1200 (e.g., the first FPCB 1260 of FIG. 12A).

For example, the solder pad 1575 and the x-axis sensing wiring 1512 may be bonded by an anisotropic conductive film (ACF) or a hot fusion diffusion bar. The solder pad 1575 and the first FPCB 1260 may be bonded by an anisotropic conductive film (ACF) or hot fusion diffusion bar.

A foldable electronic device (e.g., the foldable electronic device 200 of FIGS. 2a and 3) according to one embodiment of the present disclosure may include a foldable housing including a first housing part (e.g., the first housing part 211 of FIGS. 2a and 3), a second housing part (e.g., the second housing part 212 of FIGS. 2a and 3), and a third housing part (e.g., the third housing part 213 of FIGS. 2a and 3);

A support plate for supporting a foldable display according to one embodiment of the present disclosure may include: a foldable housing including a first housing part 211, a second housing part 212, and a third housing part 213; a first hinge structure (e.g., the first hinge part 231 of FIGS. 2a and 3) rotatably connecting the first housing part 211 and the second housing part 212; a second hinge structure (e.g., the second hinge part 232 of FIGS. 2a and 3) connecting the second housing part 212 and the third housing part 213; a foldable display disposed on the front of the first housing part 211, the second housing part 212, and the third housing part 213; a support plate supporting the flexible display (e.g., the flexible plate 240 of FIG. 7, the flexible plate 1200 of FIG. 12A); and a digitizer control circuit (e.g., the digitizer control circuit 1242 of FIG. 12a). The flexible display 220 may include a first folding part and a second folding part. The support plate 240 may include a first plate part 241 and 1211, a second plate part 242 and 1212, a third plate part 243 and 1213, a first flexible part 244 supporting the first folding part of the flexible display, and a second flexible part 245 supporting the second folding part of the flexible display. The first flexible part 244 may include first slits 244a. The second flexible part 245 may include second slits 245a. The first flexible part 244 and the second flexible part 245 may include x-axis sensing wiring (e.g., x-axis sensing wiring 1221 of FIG. 12A) disposed in the x-axis direction in the first layer to form x-axis channels of the digitizer. The first flexible part 244 and the second flexible part 245 may include y-axis sensing wiring (e.g., y-axis sensing wiring 1222 of FIG. 12A) disposed in a y-axis direction orthogonal to the x-axis direction in a second layer different from the first layer to form y-axis channels of the digitizer.

According to aspects of the disclosure, the first plate part and the second plate part may be arranged at a distance to each other and/or separated from each other by the flexible part, e.g. by the first flexible part or by the second flexible part. An advantage of this embodiment may be that the plate parts can be moved and e.g. swiveled with respect to the flexible part easily.

According to aspects of the disclosure, the first plate part and the second plate part may be arranged at a distance to each other and/or separated from each other by the first flexible part, and the second plate part and the third plate part may be arranged at a distance to each other and/or separated from each other by the second flexible part. An advantage of this aspect may be that the plate parts can be moved and e.g. swiveled with respect to the flexible part easily.

According to aspects of the disclosure, the first flexible part may be formed with a first width, and the second flexible part may be formed with a second width that is wider than the first width. The first and second widths may be aligned with a distance direction in which the first plate part and the second plate part may be arranged at a distance to each other, and/or in which the second plate part and the third plate part may be arranged at a distance to each other. The first slits and/or the second slits may extend perpendicular to the distance direction. The first slits and/or the second slits may be smaller along the distance direction than perpendicular to the distance direction. An advantage of this aspect may be that the display can be folded as desired, in particular with three sections.

According to aspects of the disclosure, the x-axis sensing wiring may be disposed to cross the first plate part, the second plate part and the flexible part. According to aspects of the disclosure, the x-axis sensing wiring may be disposed to cross the first plate part, the second plate part, the third plate part, the first flexible part, and the second flexible part. According to aspects of the disclosure, the x-axis wiring may comprise a plurality of x-axis sensing wirings. According to aspects of the disclosure, each of the x-axis sensing wirings may be disposed to cross the first plate part, the second plate part 212, the third plate part, the first flexible part, and the second flexible part. An advantage of this aspect may be that the digitizer can sense the pen also in the flexible part or the flexible parts.

According to aspects of the disclosure, each of the x-axis sensing wiring may be disposed avoiding the first slits in the first flexible part and avoiding the second slits in the second flexible part. According to aspects of the disclosure, the x-axis sensing wiring may be limited to sections of the flexible part or of the flexible parts that are adjacent to the slits. An advantage of this aspect may be that the x-axis sensing wiring is less prone to wear and tear due to folding the electronic device.

According to aspects of the disclosure, the y-axis sensing wiring may be distributed and disposed on the first plate part, the second plate part , and the third plate part. An advantage of this aspect may be that the pen can be sensed by the y-axis sensing wiring more accurately.

According to aspects of the disclosure, a first y-axis sensing wiring of the y-axis sensing wiring may be disposed on the first plate part . According to aspects of the disclosure, the first y-axis sensing wiring may be limited to the first plate part. An advantage of this aspect may be that connecting the first y-axis sensing to the digitizer control circuit may be easy.

According to aspects of the disclosure, a second y-axis sensing wiring of the y-axis sensing wiring may be disposed on the first plate part, the first flexible part, and the second plate part. According to aspects of the disclosure, the second y-axis sensing wiring may be limited to the second plate part. An advantage of this aspect may be that connecting the second y-axis sensing two the digitizer control circuit may be easy.

According to aspects of the disclosure, the second y-axis sensing wiring may be disposed in the first flexible part avoiding the first slits. According to aspects of the disclosure, the second y-axis sensing wiring may comprise a plurality of second y-axis sensing wirings. According to aspects of the disclosure, each of the second y-axis sensing wirings may be disposed in the first flexible part avoiding the first slits. An advantage of this aspect may be that wear and tear of the second y-axis sensing wiring due to repeated folding is reduced.

According to aspects of the disclosure, the second y-axis sensing wiring or each of the second y-axis sensing wirings may be disposed in the second flexible part avoiding the second slits. An advantage of this aspect may be that wear and tear of the second y-axis sensing wiring due to repeated folding is reduced.

According to aspects of the disclosure, a third y-axis sensing wiring of the y-axis sensing wiring may be disposed on the second plate part, the second flexible part and, and the third plate part. An advantage of this aspect may be that connecting the third y-axis sensing to the digitizer control circuit may be easy.

According to aspects of the disclosure, the third y-axis sensing wiring may be disposed in the second flexible part avoiding the second slits. According to aspects of the disclosure, the third y-axis sensing wiring may comprise a plurality of third y-axis sensing wirings. According to aspects of the disclosure, each of the third y-axis sensing wirings may be disposed in the second flexible part avoiding the second slits. An advantage of this aspect may be that connecting the third y-axis sensing to the digitizer control circuit may be easy.

According to aspects of the disclosure, a fourth y-axis sensing wiring of the y-axis sensing wiring may be disposed on the third plate parts. An advantage of this aspect may be that connecting the fourth y-axis sensing to the digitizer control circuit may be easy.

According to aspects of the disclosure, the second flexible part may include a first area and a second area in which the second slits are distributed and disposed. The second flexible part may include a planar area formed between the first area and the second area and having no slits formed therein or without having slits formed therein. An advantage of this aspect may be that deformation is limited to section required.

According to aspects of the disclosure, the planar area may include a plurality of vias. At least some vias of the plurality of vias may electrically connect the x-axis sensing wiring or y-axis sensing wiring disposed in different layers. Vias maybe through holes at least partially extending through the support plate comprising or being plated with conductive material and electrically interconnecting different layers. An advantage of this aspect may be that the x-axis sensing wiring or y-axis sensing wiring can be connected without affecting the x-axis sensing wiring or y-axis sensing wiring in its respective layer.

According to aspects of the disclosure, the first slits and the second slits may be disposed in a lattice shape. An advantage of this aspect may be that flexibility of the respective flexible part can be aligned as desired.

According to aspects of the present disclosure, the electronic device may include: a foldable housing including a first housing part, a second housing part and a third housing part; a first hinge structure rotatably connecting the first housing part and the second housing part; a second hinge structure rotatably connecting the second housing part and the third housing part; a flexible display disposed on a front surface of the first housing part, the second housing part, the third housing part; and a digitizer control circuit. The support plate may include the first plate part, the second plate part, the third plate part, a first flexible part supporting a first folding part of the flexible display, and a second flexible part supporting a second folding part of the flexible display. The first flexible part may include first slits. The second flexible part may include second slits. The first flexible part and the second flexible part may include x-axis sensing wiring disposed in the x-axis direction in the first layer to form x-axis channels of the digitizer. The first flexible part and the second flexible part may include y-axis sensing wiring disposed in a y-axis direction orthogonal to the x-axis direction in a second layer different from the first layer to form y-axis channels of the digitizer. An advantage of this aspect may be that an electronic device with three housing parts can be folded and readily used with a pen, even at sections of the foldable display that are actually deformed by folding, i.e. the sections that are supported by the flexible parts of the support plate.

According to another aspect of the disclosure, a support plate for supporting a foldable display of an electronic device may be provided. The support plate may include a first plate pate and a second plate part. The support plate may include a flexible part. The flexible part may be adapted to support a flexible part of a flexible display. The flexible part may be arranged between the first plate part and the second plate part. The flexible part may interconnect the first plate part and the second plate part. The flexible part may comprise slits, e.g. the first and/or the second slits. The flexible part may include x-axis wiring. The x-axis wiring may extend in an x-axis direction. The x-axis wiring may be formed in a first layer of the support plate to form x-axis channels of a digitizer to be connect to the digitizer control circuit of the electronic device. The flexible part may include y-axis wiring. The y-axis wiring may extend in a y-axis direction. The y-axis direction may extend perpendicular to the x-axis direction. The y-axis wiring may be formed in a second layer of the support plate to form y-axis channels of a digitizer to be connect to the digitizer control circuit of the electronic device. The x-axis channels and y-axis channels may be part of the same digitizer.

The x-axis direction may be a width direction of the display. The x-axis direction may extend perpendicular to the flexible part. The x-axis direction may extend perpendicular to the first flexible part and/or to the second flexible part. The x-axis direction may extend from the first plate part to the second plate part. The x-axis direction may be a width direction of the flexible part. The x-axis direction may be a width direction of the first flexible part and/or to the second flexible part. According to another aspect of the disclosure, a foldable electronic device comprising a flexible display may be provided. The foldable electronic device may comprise a foldable housing comprising a first housing part and a second housing part. The foldable electronic device may comprise a hinge structure rotatably connecting the first housing part to the second housing part. The foldable electronic device may a flexible display disposed on a front surface of the first and second housing parts. The foldable electronic device may comprise a support plate supporting the flexible display. The foldable electronic device may comprise a digitizer control circuit. The support plate may include a first plate pate and a second plate part. The support plate may include a flexible part, e.g. the first flexible part or the second flexible part. The flexible part may support a flexible section of the flexible display. The flexible part may be arranged between the first plate part and the second plate part. The flexible part may interconnect the first plate part and the second plate part. The flexible part may comprise slits, e.g. the first and/or the second slits. The flexible part may include x-axis wiring. The x-axis wiring may extend in an x-axis direction. The x-axis wiring may be formed in a first layer of the support plate to form x-axis channels of a digitizer connect to the digitizer control circuit of the electronic device. The flexible part may include y-axis wiring. The y-axis wiring may extend in a y-axis direction. The y-axis direction may extend perpendicular to the x-axis direction. The y-axis wiring may be formed in a second layer of the support plate to form y-axis channels of a digitizer connect to the digitizer control circuit of the electronic device. The x-axis channels and y-axis channels may be part of the same digitizer.

A foldable electronic device according to aspects of the present disclosure may include two hinge parts or hinges, a foldable display (e.g., flexible display) divided into three display parts for folding twice, a multi-detachable digitizer divided into three digitizer parts for folding twice, a flexible plate for supporting the foldable display (e.g., flexible display), and a digitizer for detecting coordinates of an electronic pen (e.g., a stylus pen).

A foldable electronic device according to aspects of the present disclosure may incorporate a flexible plate for supporting a foldable display (e.g., a flexible display) and a digitizer for detecting coordinates of an electronic pen (e.g., a stylus pen), thereby reducing the thickness of the foldable electronic device and reducing manufacturing cost.

A foldable electronic device according to aspects of the present disclosure may obtain coordinates of an electronic pen in an area corresponding to a first hinge (e.g., a narrow hinge part) and a second hinge (e.g., a wide hinge part) of the foldable electronic device.

The effects of the present disclosure are not limited to those mentioned above, and other effects not mentioned will be apparent to one having ordinary knowledge in the technical field to which the present disclosure belongs from the following description.

## Claims

1. A foldable electronic device (200) comprising:
a foldable housing including a first housing part (211), a second housing part (212), and a third housing part (213);
a first hinge structure (231) rotatably connecting the first housing part (211) and the second housing part (212);
a second hinge structure (232) rotatably connecting the second housing part (212) and the third housing part (213);
a flexible display (220) disposed on a front surface of the first housing part (211), the second housing part (212), and the third housing part (213);
a support plate (240) supporting the flexible display (220); and
a digitizer control circuit (1242), wherein
the flexible display (220) includes a first folding part and a second folding part;
the support plate (240) includes a first plate part (241, and 1211), a second plate part (242, and 1212), a third plate part (243, and 1213), a first flexible part (244, 1214) for supporting a first folding part of the flexible display (220), and a second flexible part (245, 1215) for supporting a second folding part of the flexible display (220);
the first flexible part (244, 1214) includes first slits (244a);
the second flexible part (245, 1215) includes second slits (245a); and
the first flexible part (244, 1214) and the second flexible part (245, 1215) include x-axis sensing wiring (1221) disposed in an x-axis direction in a first layer of the support plate (240) to form x-axis channels of the a digitizer to be connected to the digitizer control circuit (1242) of electronic device (200), and y-axis sensing wiring (1222) disposed in a y-axis direction orthogonal to the x-axis direction in a second layer of the support plate (240) different from the first layer to form y-axis channels of the digitizer.

2. The foldable electronic device (200) of claim 1, wherein
the first flexible part (244, 1214) is formed with a first width, and
the second flexible part (245, 1215) is formed with a second width that is wider than the first width.

3. The foldable electronic device (200) of claim 1 or 2, wherein
the x-axis sensing wiring (1221) is disposed to cross the first plate part (241, 1211), the second plate part (242, 1212), the third plate part (243, 1213), the first flexible part (244, 1214) and the second flexible part (245, 1215).

4. The foldable electronic device (200) of any one of claims 1 to 3, wherein
the x-axis sensing wiring (1221) is disposed avoiding the first slits (244a) in the first flexible part (244, 1214) and avoiding the second slits (245a) in the second flexible part (245, 1215).

5. The foldable electronic device (200) of any one of claims 1 to 4, wherein
the y-axis sensing wiring (1222) is distributed and disposed on the first plate part (241, 1211), the second plate part (242, 1212) and the third plate part (243, 1213).

6. The foldable electronic device (200) of any one of claims 1 to 5, wherein
a first y-axis sensing wiring of the y-axis sensing wiring 1222 is disposed on the first plate part (241, 1211).

7. The foldable electronic device (200) of claim 6, wherein
a second y-axis sensing wiring of the y-axis sensing wiring (1222) is disposed on the first plate part (241, 1211), the first flexible part (244, 1214) and the second plate part (242, 1212).

8. The foldable electronic device (200) of claim 7, wherein
the second y-axis sensing wiring is disposed on the first flexible part (244, 1214) avoiding the first slits (244a).

9. The foldable electronic device (200) of claim 7 or 8, wherein
a third y-axis sensing wiring of the y-axis sensing wiring (1222) is disposed on the second plate part (242, 1212), the second flexible part (245, 1215) and the third plate part (243, 1213).

10. The foldable electronic device (200) of claim 9, wherein
the third y-axis sensing wiring is disposed avoiding the second slits (245a) in the second flexible part (245, 1215).

11. The foldable electronic device (200) of claim 9 or 10, wherein
a fourth y-axis sensing wiring of the y-axis sensing wiring (1222) is disposed on the third plate part (243, 1213).

12. The foldable electronic device (200) of any one of claims 1 to 11, wherein
the second flexible part (245, 1215) includes a first area (1011) and a second area (1012) in which the second slits (245a) are distributed and disposed, and
the second flexible part (245, 1215) includes a planar area (1013) formed between the first area (1011) and the second area (1012) without having slits formed therein.

13. The foldable electronic device (200) of claim 12, wherein
the planar area (1013) includes a plurality of vias (1590), wherein at least some vias (1590) the plurality of vias (1590) electrically connect x-axis sensing wiring (1221) or y-axis sensing wiring (1222) disposed in different layers.

14. The foldable electronic device (200) of any one of claims 1 to 13, wherein
the first slits (244a) and the second slits (245a) are disposed in a lattice shape.
